# EUROPEAN PATENT APPLICATION

(11) **EP 4 730 095 A1**
(43) Date of publication of application: **22.04.2026**
(21) Application number: 24845736.8
(22) Date of filing: 26.04.2024
(51) Int. Cl.: G06F 3/04842, G06F 40/40, G06F 40/30, G10L 15/26

(54) **FAST EXECUTION METHOD USING INPUT FIELD AND ELECTRONIC DEVICE THEREFOR**

(30) Priority: 25.07.2023 KR 20230096846; 23.10.2023 KR 20230142410
(71) Applicant: Samsung Electronics Co., Ltd., Suwon-si, Gyeonggi-do 16677 (KR)
(72) Inventor: CHUNG, Jinkyo, Suwon-si, Gyeonggi-do 16677 (KR); KIM, Jungmi, Suwon-si, Gyeonggi-do 16677 (KR); SUH, Haebahrem Ahram, Suwon-si, Gyeonggi-do 16677 (KR); AN, Jinwan, Suwon-si, Gyeonggi-do 16677 (KR); KIM, Hyunjung, Suwon-si, Gyeonggi-do 16677 (KR); KIM, Munhwi, Suwon-si, Gyeonggi-do 16677 (KR)
(74) Representative: Gulde & Partner
(86) International application number: PCT/KR2024/005720
(87) International publication number: WO 2025/023432

(57) **Abstract**

An embodiment of the present invention may comprise: a display (160); a memory (130) storing instructions; and a processor (120). The instructions stored in the memory, when executed by the processor, cause the electronic device to: display an input field in response to a first user input calling the input field; acquire a second user input that is input to the input field; display the acquired second user input as text in the input field; and analyze the content of the text and control at least one actionable item for processing the analyzed content so that the actionable item is displayed to with at least a portion of the text via the display, wherein the at least one actionable item may include at least one of an actionable object of an application, an actionable object providing a function in the application, an action preview based on generative artificial intelligence (AI), or a setting object of the electronic device.

## Description

### [Technical Field]

Various embodiments of the disclosure relate to a fast execution method using an input field and an electronic device therefor.

### [Background Art]

With the development of digital technologies, various types of electronic devices such as mobile communication terminals, personal digital assistants (PDAs), electronic organizers, smartphones, tablet personal computers (PCs), or wearable devices have become widely used. The hardware parts and/or software parts of such electronic devices are continually improving in order to improve support and increase functions thereof.

For example, the electronic device may control execution of the electronic device or the application, or perform a function using a web-based service, through a voice command of the user using a voice recognition technology. Alternatively, the electronic device may be connected to a wireless input/output device (for example, earphones or a headphone) via short-range wireless communication, such as Bluetooth, and may output a sound of music or a video through the wireless input/output device. Alternatively, the electronic device (for example, a smartphone) may provide extended reality (XR) content such as virtual reality (VR), augmented reality (AR), and/or mixed reality (MR) by being connected to a wearable display device (for example, AR glasses).

### [Disclosure of Invention]

### [Technical Problem]

An embodiment may disclose a method and an apparatus for allowing a user to call an input field whenever and wherever, and for analyzing content input into the input field by the user to provide at least one actionable object which may correspond to various search content.

### [Solution to Problem]

An electronic device 101 according to an embodiment of the disclosure may include a display 160, a memory 130 configured to store instructions, and a processor 120, wherein the instructions stored in the memory, when executed by the processor, cause the electronic device to display an input field in response to a first user input calling the input field, acquire a second user input which is input into the input field, display the acquired second user input as text in the input field, and perform control to analyze contents of the text and display at least one actionable item for processing the analyzed contents, together with at least a part of the text, through the display, and wherein the at least one actionable item may include at least one of an actionable object of an application, an actionable object providing a function within the application, an execution preview based on generative artificial intelligence (AI), or a configuration object of the electronic device.

A method of operating an electronic device according to an embodiment may include displaying an input field, in response to a first user input calling the input field, acquiring a second user input which is input into the input field, displaying the acquired second user input as text in the input field, and performing control to analyze contents of the text and display at least one actionable item for processing the analyzed contents, together with at least a part of the text, through the display of the electronic device, wherein the at least one actionable item may include at least one of an actionable object of an application, an actionable object providing a function within the application, an execution preview based on generative artificial intelligence (AI), or a configuration object of the electronic device.

### [Advantageous Effects of Invention]

According to an embodiment, it is possible to provide a method of calling an input field to allow a user to call the input field anytime and anywhere for fast execution.

According to an embodiment, it is possible to provide various actionable objects (or action objects) that can rapidly execute a function which the user desires by predicting a user intention, based on the content input into the input field.

According to an embodiment, it is possible to assist a user in rapidly performing a desired function by analyzing a word, a number, a sentence, or a long text input into the input field and providing a subsequent item corresponding thereto.

### [Brief Description of Drawings]

FIG. 1 is a block diagram illustrating an electronic device within a network environment according to an embodiment.
FIG. 2 is a diagram illustrating an example in which the electronic device provides an actionable object according to an embodiment.
FIG. 3 is a flowchart illustrating a method of operating the electronic device according to an embodiment.
FIG. 4A is a diagram illustrating an example of calling the input field on a home screen of the electronic device and providing an actionable object according to an embodiment.
FIG. 4B is a diagram illustrating an example in which the electronic device provides an actionable object in an application execution screen according to an embodiment.
FIG. 5A is a diagram illustrating an example in which the electronic device changes an actionable object according to an embodiment.
FIG. 5B is a diagram illustrating an example in which the electronic device performs a desired function in response to a selection of an actionable object according to an embodiment.
FIG. 6 is a flowchart illustrating a method by which the electronic device provides an actionable object corresponding to a user input according to an embodiment.
FIG. 7A is a diagram illustrating an example in which the electronic device provides weather information, based on a user input, according to an embodiment.
FIG. 7B is a diagram illustrating an example in which the electronic device provides health information, based on a user input, according to an embodiment.
FIG. 7C is a diagram illustrating an example in which the electronic device provides a timer, based on a user input, according to an embodiment.
FIG. 7D is a diagram illustrating an example in which the electronic device controls a configuration of the electronic device, based on a user input, according to an embodiment.
FIG. 8A is a diagram illustrating an example in which the electronic device provides an actionable object related to Internet access, based on a user input, according to an embodiment.
FIG. 8B is a diagram illustrating an example in which the electronic device provides coupon information as an actionable object in response to a user input according to an embodiment.
FIG. 8C is a diagram illustrating an example in which the electronic device provides an actionable object related to a call log in response to a user input according to an embodiment
FIG. 8D is a diagram illustrating an example in which an electronic device provides exercise information as an execution object in response to a user input according to an embodiment.
FIG. 9A is a diagram illustrating an example in which the electronic device provides expense information as an actionable object according to an embodiment.
FIG. 9B is a diagram illustrating an example in which the electronic device provides an actionable object related to message transmission according to an embodiment.
FIG. 9C is a diagram illustrating an example in which the electronic device provides an actionable object related to a diet information input according to an embodiment.
FIG. 9D is a diagram illustrating an example in which the electronic device provides an actionable object related to a memo according to an embodiment.
FIG. 10 is a flowchart illustrating a method by which the electronic device differently provides an actionable object in response to a user input according to an embodiment.
FIGS. 11A and 11B are diagrams illustrating an example in which the electronic device differently provides an actionable object in response to input content according to an embodiment.
FIGS. 12A to 12C are diagrams illustrating an example in which the electronic device performs a desired function through an actionable object provided in response to a user input according to an embodiment.
FIGS. 13A to 13C are diagrams illustrating an example in which an electronic device provides an execution object in response to a user input according to an embodiment.
FIGS. 14A and 14B are diagrams illustrating an example in which the electronic device classifies a task type according to an embodiment.
FIGS. 15A and 15B illustrate an example in which the electronic device analyzes an image to provide an execution object according to an embodiment.
FIGS. 16A and 16B are diagrams illustrating an example in which the electronic device provides a preview of an application list for processing text according to an embodiment.

### [Mode for the Invention]

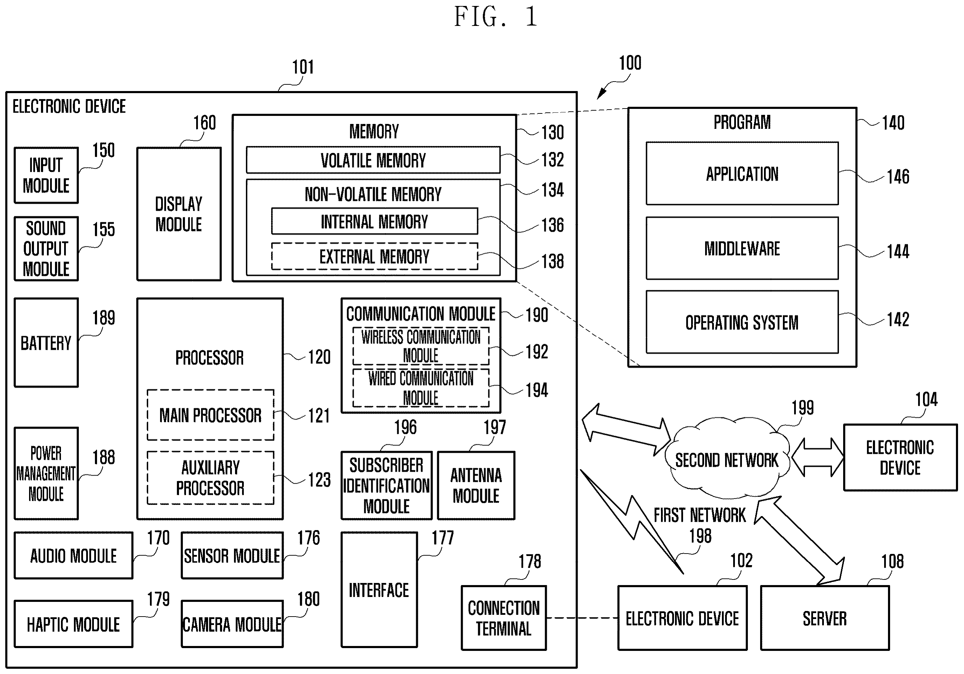

Fig. 1 is a block diagram illustrating an electronic device 101 in a network environment 100 according to certain embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5th generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4th generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to certain embodiments, the antenna module 197 may form a mmWave antenna module. According to an embodiment, the mmWave antenna module may include a printed circuit board, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments disclosed herein may be one of various types of electronic devices. The electronic devices may include, for example, a portable communication device (e.g., a smart phone), a computer device, a portable multimedia device, a portable medical device, a camera, a wearable device, or a home appliance. The electronic device according to embodiments of the disclosure is not limited to those described above.

It should be appreciated that various embodiments of the disclosure and the terms used therein are not intended to limit the technological features set forth herein to particular embodiments and include various changes, equivalents, or alternatives for a corresponding embodiment. With regard to the description of the drawings, similar reference numerals may be used to designate similar or relevant elements. A singular form of a noun corresponding to an item may include one or more of the items, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "a first", "a second", "the first", and "the second" may be used to simply distinguish a corresponding element from another, and does not limit the elements in other aspect (e.g., importance or order). It is to be understood that if an element (e.g., a first element) is referred to, with or without the term "operatively" or "communicatively", as "coupled with/to" or "connected with/to" another element (e.g., a second element), it means that the element may be coupled/connected with/to the other element directly (e.g., wiredly), wirelessly, or via a third element.

As used herein, the term "module" may include a unit implemented in hardware, software, or firmware, and may be interchangeably used with other terms, for example, "logic," "logic block," "component," or "circuit". The "module" may be a minimum unit of a single integrated component adapted to perform one or more functions, or a part thereof. For example, according to an embodiment, the "module" may be implemented in the form of an application-specific integrated circuit (ASIC).

Various embodiments as set forth herein may be implemented as software (e.g., the program 140) including one or more instructions that are stored in a storage medium (e.g., the internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities, and some of the multiple entities mat be separately disposed in any other element. According to various embodiments, one or more of the above-described elements may be omitted, or one or more other elements may be added. Alternatively or additionally, a plurality of elements (e.g., modules or programs) may be integrated into a single element. In such a case, according to various embodiments, the integrated element may still perform one or more functions of each of the plurality of elements in the same or similar manner as they are performed by a corresponding one of the plurality of elements before the integration. According to various embodiments, operations performed by the module, the program, or another element may be carried out sequentially, in parallel, repeatedly, or heuristically, or one or more of the operations may be executed in a different order or omitted, or one or more other operations may be added.

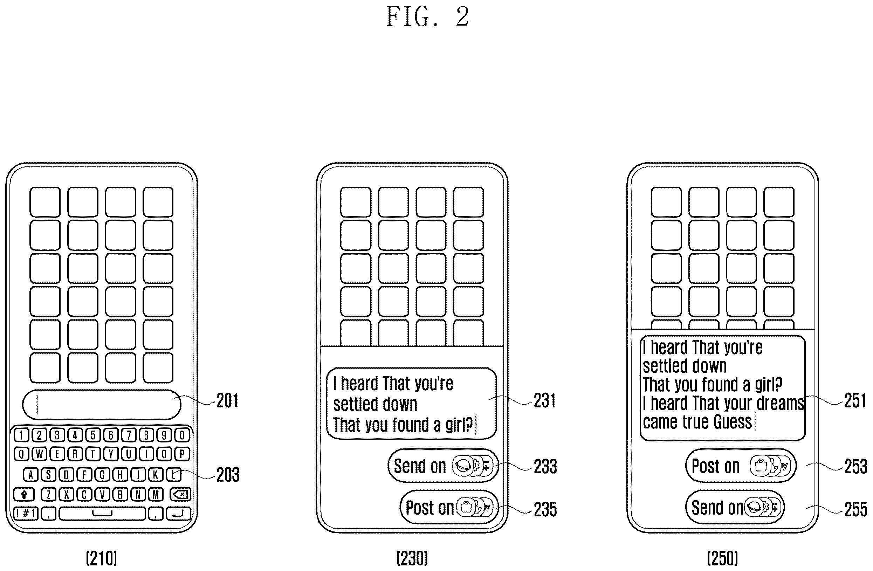

FIG. 2 is a diagram illustrating an example in which an electronic device provides an actionable object according to an embodiment.

Referring to FIG. 2, the electronic device (for example, the electronic device 101 of FIG. 1) according to an embodiment may provide a first user interface 210 including an input field 201 and a keypad (or a virtual keypad (soft input panel (SIP)) 203. The electronic device 101 may detect a user input for calling the input field 201, and in response to the detected user input, display the first user interface 210 on a display (for example, the display module 160 of FIG. 1). The input field 201 may be an item (or a field) for receiving an input of text from a user. The electronic device 101 may provide the keypad 203 capable of inputting text into the input field 201. The electronic device 101 may receive an input of text from the user through the keypad 203. According to an embodiment, the electronic device 101 may receive (or acquire) a voice from the user, convert the received voice into text, and input the text into the input field 201.

The electronic device 101 may obtain a user input input into the input field 201 and display the obtained user input in text. The electronic device 101 may analyze the content of the displayed text and display at least one actionable item for processing the analyzed content together with at least a part of the text. The electronic device 101 may display a second user interface 230 or a third user interface 250 on the display module 160 in order to process the analyzed content.

The second user interface 230 may include first text 231, first actionable items 233, and second actionable items 235. The first text 231 may be content input from the user into the input field 201. The first actionable items 233 may include an icon of an application capable of transmitting the first text 231. For example, the first actionable items 233 may include a plurality of items, such as an icon of a first messenger application (for example, message), an icon of a second messenger application (for example, Telegram), and an icon of a third messenger application. When at least one of the first actionable items 233 is selected, the electronic device 101 may provide an execution screen of the messenger application in which the first text 231 is input into the input field of the messenger application. The electronic device 101 may analyze the content of the first text 231 and provide an actionable screen of the messenger application in which a person to whom the first text 231 is to be transmitted is configured, or receive selection of a person to whom the first text 231 is to be transmitted from the user through the execution screen of the application.

The second actionable item 235 may include an icon of an application capable of posting the first text 231. For example, the second actionable item 235 may include a plurality of items, such as an icon of a first posting application (for example, Instagram), an icon of a second posting application (for example, Twitter), or an icon of a third posting application. When at least one of the second actionable items 235 is selected, the electronic device 101 may provide an execution screen of the posting application in which the first text 231 is input into the input field of the posting application. Since the first text 231 has shorter content than a predetermined length, the electronic device 101 may determine that the intention to transmit the content of the first text 231 is greater than to post it, and expose the first actionable item 233 higher than the second actionable item 235 in consideration of the user's convenience.

The third user interface 250 may include second text 251, a third actionable item 253, and a fourth actionable item 255. The second text 251 may be content additionally input by the user after the first text 231 in the input field 201. The third actionable item 253 may include an icon of an application capable of posting the second text 251. The fourth actionable item 255 may include an icon of an application capable of transmitting the second text 251. Since the second text 251 is longer content than the first text 231, the electronic device 101 may determine that the intent to post the content of the second text 251 is greater than to transmit the content of the second text 251, and expose the third actionable item 253 higher than the fourth actionable item 255 in consideration of user convenience.

An electronic device 101 according to an embodiment of the disclosure may include a display 160, a memory 130 configured to store instructions, and a processor 120, wherein the instructions stored in the memory, when executed by the processor, cause the electronic device to display an input field in response to a first user input calling the input field, acquire a second user input input into the input field, display the acquired second user input in text in the input field, and analyze content of the text and perform control to display at least one actionable item for processing the analyzed content together with at least a part of the text through the display, and wherein the at least one actionable item may include at least one of an actionable object of an application, an actionable object providing a function within the application, an execution preview based on generative artificial intelligence (AI), or a configuration object of the electronic device.

The instructions may, when executed by the processor, cause the electronic device to extract a parameter from the text, generate a search result by using the extracted parameter, determine an application list by a view constraint condition filter, generate an execution preview of an application included in the application list, and provide the generated execution preview.

The instructions may, when executed by the processor, cause the electronic device to analyze a user intention, based on that text input into the input field in real time is updated and add or change at least one actionable item displayed on the display, in response to the analyzed user intention.

The instructions may, when executed by the processor, cause the electronic device to, in case that a first actionable item among a plurality of actionable items is configured as a target task, change the target task to a second actionable item, based on a third user input, in the plurality of actionable items.

The instructions may, when executed by the processor, cause the electronic device to transfer the text, as an input, to an application of an actionable item selected by a user in the at least one actionable item and in response to the selection of the actionable item, display an execution screen of an application having processed the transferred text on the display.

The instructions may, when executed by the processor, cause the electronic device to transfer the text, as an input, to a configuration of the electronic device or user personal information corresponding to an actionable item selected by a user in the at least one actionable item and, in response to the selection of the actionable item, display a configuration screen of the electronic device having processed the transferred text or the user personal information on the display.

The instructions may, when executed by the processor, cause the electronic device to analyze the at least one actionable item and display an action object of an application for an additional configuration of a user in the at least one actionable item.

The instructions may, when executed by the processor, cause the electronic device to convert a voice of the at least one actionable item into text, analyze the converted text to extract data validity information, and display an action object of an application for an additional configuration of a user in the at least one actionable item, based on the data validity information. For example, the data validity information may include core keywords related to the user intention acquired based on the input text analysis result.

The instructions may, when executed by the processor, cause the electronic device to collect data stored in the memory of the electronic device and in an application installed in the electronic device, based on content of the acquired text and analyze the collected data and provide analysis result information as the at least one actionable item.

The instructions may, when executed by the processor, cause the electronic device to configure answer content corresponding to content of the acquired text through interworking with an external server and provide the answer content as the at least one actionable item.

The instructions may, when executed by the processor, cause the electronic device to search for data through the Internet, based on content of the acquired text and provide, as the at least one actionable item, the searched for data as Internet result information.

The instructions may, when executed by the processor, cause the electronic device to receive selection of an image captured by the second user input and acquire text from the selected captured image and display the text.

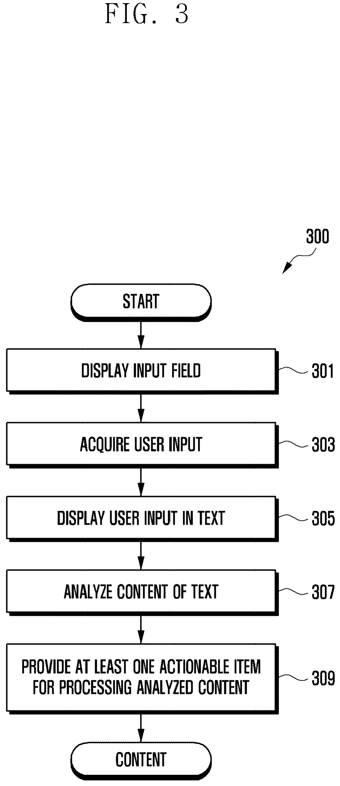

FIG. 3 is a flowchart 300 illustrating a method of operating an electronic device according to an embodiment.

Referring to FIG. 3, in operation 301, a processor (for example, the processor 120 of FIG. 1) of an electronic device (for example, the electronic device 101 of FIG. 1) according to an embodiment may display an input field. The processor 120 may detect a first user input for calling an input field, and in response to the detected user input, display the input field on a display (for example, the display module 160 of FIG. 1). The processor 120 may, when providing the input field, also provide a keypad capable of inputting text input to the input field. For example, when receiving a specified user input for calling the input field from a home screen, the processor 120 may provide the input field. Alternatively, when receiving a specified user input for calling the input field in the execution screen of the application, the processor 120 may provide the input field. The predetermined user input for calling the input field may be an upward drag (or swipe) from a lower bezel area of the electronic device 101 to an area in which the display is located in the home screen.

In operation 303, the processor 120 may acquire a second user input input into the input field. The user input may be acquired through the keypad provided together when the input field is provided. Alternatively, the processor 120 may receive a voice as the user input, and convert the received voice into text by using a speech to text technique.

In operation 305, the processor 120 may display the user input in text in the input field. The processor 120 may display the text in the input field as the user input is acquired. The processor 120 may convert the user's voice into text, and display the converted text in the input field.

In operation 307, the processor 120 may analyze the content of the text. The processor 120 may analyze whether the text includes a number, whether the length of the text is equal to or greater than a reference value (or predetermined length), and whether the text is an input for a conversation or an input for a search. The processor 120 may analyze the content of the text in conjunction with an external server (for example, the server 108 of FIG. 1) or by using an artificial intelligence function stored in the memory (for example, the memory 130 of FIG. 1). The processor 120 may analyze the content of the text to identify an application for processing the content of the text, identify a specific function within the application, or identify a configuration of the electronic device 101.

In operation 309, the processor 120 may provide at least one actionable item for processing the content of the analyzed text. The at least one actionable item may include a visual object configured to be executable for text processing. For example, the at least one actionable item may include at least one of an actionable object of the application (for example, a button, a menu, or an item), an actionable object providing a function within the application, a generative artificial intelligence (Al)-based execution preview, or a configuration object of the electronic device. The processor 120 may search for a function for processing the content of the analyzed text in an internet (or website) application. The processor 120 may display the at least one actionable item or at least a part of the text together with the display module 160. When a user input for dragging the input field included in the execution screen of the application in a predetermined direction, for example, an up direction or a down direction, is detected, the processor 120 may provide at least one actionable item for processing the content of the analyzed text.

According to an embodiment, the processor 120 may analyze a user intention, based on that the text input into the input field in real time is updated. The user may continue to input text into the input field. The processor 120 may analyze, in real time, a user intention corresponding to the content of the input text according to a change in the content of the input text. The processor 120 may add or change at least one actionable item displayed on the display in response to the analyzed user intention.

According to an embodiment, when the first actionable item is configured as a target task among the plurality of actionable items, the processor 120 may change the target task to the second actionable item, based on a user input (for example, swipe or scroll) within the plurality of actionable items. The plurality of actionable items may include actionable items that can be grouped into the same category providing the same function. The target task may refer to an item in which the current cursor is positioned among the plurality of actionable items. For example, three actionable items may be overlappingly displayed in a horizontal or vertical direction, and when the first actionable item is first displayed, the first actionable item may be configured as the target task. The processor 120 may change the target task to the second actionable item or the third actionable item, based on a user input for swiping among the plurality of actionable items.

According to an embodiment, the processor 120 may transfer the text, as an input, to the application of the actionable item selected by the user from the at least one actionable item, and in response to the selection of the actionable item, display an execution screen of the application that has processed the transferred text on the display module 160. For example, when the text "Shall we meet tomorrow?" is input to the input field and the first actionable item is selected, the processor 120 may display an execution screen of a message application corresponding to the first actionable item, in which the text is input into the input field of the message application.

According to an embodiment, the processor 120 may transfer the text to the configuration of the electronic device or the user's personal information corresponding to the actionable item selected by the user from the at least one actionable item, and in response to the selection of the actionable item, may display the configuration screen of the electronic device or the user's personal information, which have processed the transferred text, on the display module 160. For example, when the text "low battery" is input to the input field, the processor 120 may analyze a user intention (for example, power saving), based on the analysis result of the text, and provide an actionable item capable of turning on the battery power saving mode in the configuration of the electronic device 101, or provide an actionable item for controlling (for example,, forcibly terminating) a background execution application.

According to an embodiment, the processor 120 may analyze the at least one actionable items and display an action object of the application for an additional configuration (or execution) of the user in the at least one actionable item. The action object of the application may refer to a visual object capable of performing a specific function (or task) in the application. For example, when the at least one actionable item is a coupon image, the processor 120 may display an alarm registration object capable of registering a validity term notification as the action object of the application by identifying the validity term of the coupon.

According to an embodiment, the processor 120 may collect data stored in the memory (for example, the memory 130 in FIG. 1) of the electronic device 101 and in the application installed in the electronic device, based on the content of the acquired text, analyze the collected data, and provide the analysis result information as the at least one actionable item. For example, when receiving "Summary of the morning call" as input text, the processor 120 may search for the morning call history stored in the memory 130 or a phone application, convert a call log corresponding to the searched for morning call history into text, and provide the converted text as analysis result information. Alternatively, the processor 120 may analyze the converted text to extract data validity information, and display an action object (for example, a calendar registration object or note registration) of the application for the additional configuration of the user in the at least one actionable item, based on the data validity information. For example, the data validity information may include core keywords related to the user intention acquired based on the input text analysis result.

According to an embodiment, the processor 120 may, in conjunction with an external server (for example, the server 108 of FIG. 1), configure response content (for example, configure a response using artificial intelligence) corresponding to the content of the acquired text and provide the same as the at least one actionable item.

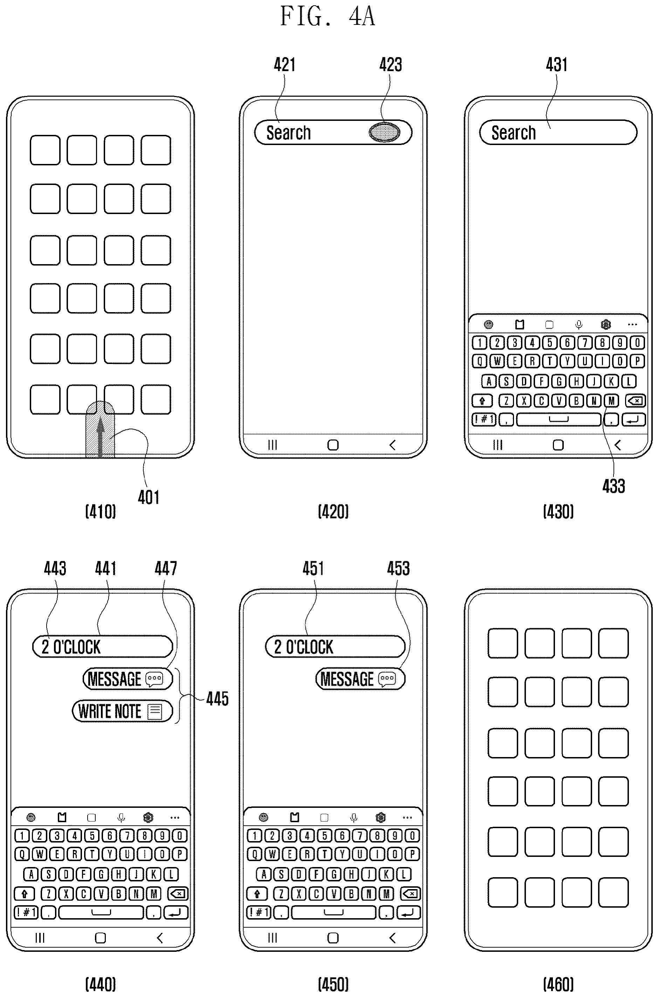

FIG. 4A is a diagram illustrating an example in which an electronic device calls an input field on a home screen and provides an actionable object according to an embodiment.

Referring to FIG. 4A, an electronic device (for example, the electronic device 101 of FIG. 1) according to an embodiment may receive a predetermined user input 401 for calling an input field in a home screen 410. For example, the predetermined user input 401 may be an upward drag (or swipe) from the bottom bezel area of the electronic device 101 to an area in which the display is located in the home screen. The electronic device 101 may display a first user interface 420 including an input field 421 on a display (for example, the display module 160 of FIG. 1), based on the predetermined user input 401 detected in the home screen 410. The first user interface 420 may include the input field 421. The electronic device 101 may detect a user input 423 for selecting the input field 421 within the first user interface 420. As the user input 423 is detected, the electronic device 101 may provide the second user interface 430. The second user interface 430 may include the input field 431 and a keypad 433. The electronic device 101 may receive an input of text into the input field 431 through the keypad 433. Alternatively, the electronic device 101 may receive the user voice, convert the received user voice into text, and input and display the converted text in the input field 431.

The electronic device 101 may provide the third user interface 440, based on the text input into the input field 431. The third user interface 440 may include at least one actionable item 445 together with at least a part of the text 443 input into the input field 441. When any one of the at least one actionable item 445 is selected, the electronic device 101 may provide a fourth user interface 450. The fourth user interface 450 may be for displaying the selected actionable item 453 for a predetermined time. When a predetermined time (for example, N seconds) has passed after the input field 451 and the selected actionable item 453 are displayed in a floating manner, the electronic device 101 may provide a fifth user interface 460. The fifth user interface 460 may be a screen in which the display of the input field and the selected actionable item has disappeared, for example, a home screen.

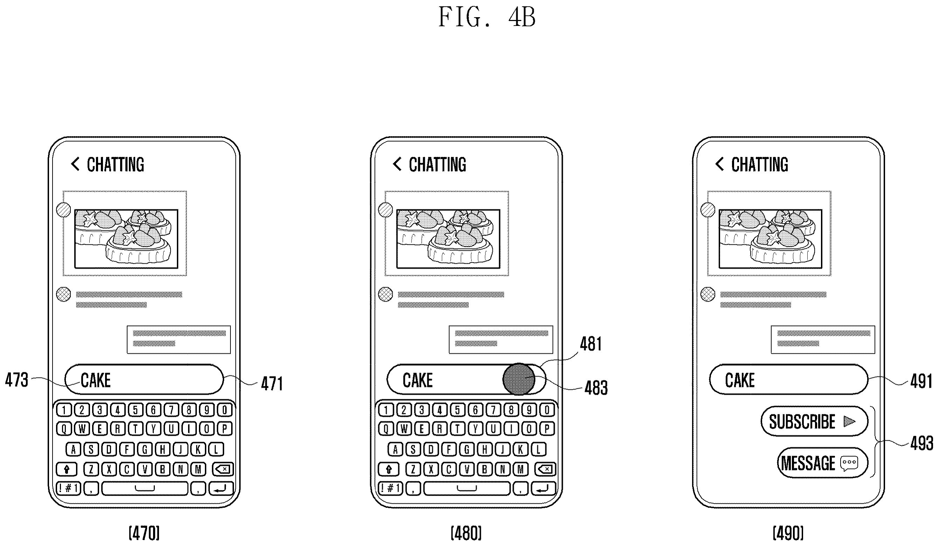

FIG. 4B is a diagram illustrating an example in which an electronic device provides an actionable object in an application execution screen according to an embodiment.

Referring to FIG. 4B, the electronic device 101 may display an application (for example, messenger application) execution screen 470 and receive a user input 473 input into the input field 471 included in the application execution screen 470. The electronic device 101 may display the acquired user input 473 in text (for example, "cake") in the input field. When a user input 483 of dragging the input field 481 in a predetermined direction, for example, an up or down direction, in a sixth user interface 480 is detected, the electronic device 101 may analyze the content of the text corresponding to the user input 483. The electronic device 101 may provide a seventh user interface 490 including at least one actionable item for processing the content of the analyzed text. The seventh user interface 490 may include at least a part 491 of the text or the at least one actionable item 493. When any one of the at least one actionable item is selected in the seventh user interface 490, the electronic device 101 may provide, as the selected actionable item, one of the execution screen of the application in which the text is processed as the input, a configuration screen of the electronic device 101, or user personal information.

5A is a diagram illustrating an example in which an electronic device changes an actionable object according to an embodiment.

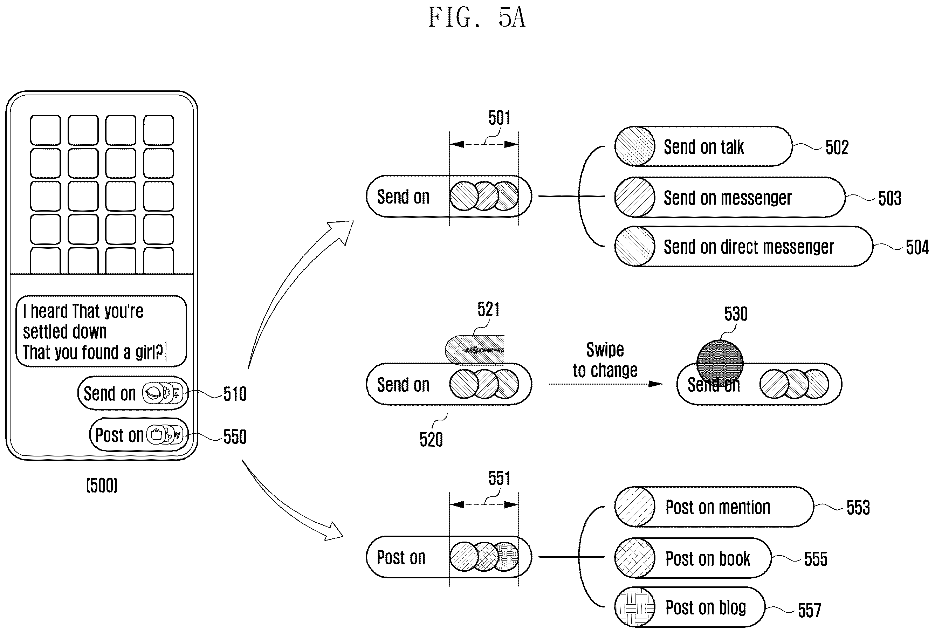

Referring to FIG. 5A, an electronic device (for example, the electronic device 101 of FIG. 1) according to an embodiment may provide a user interface 500 including a plurality of actionable items 510 and 550, based on text input into an input field. A plurality of first actionable items 510 may be actionable objects of an application for transmitting text. A plurality of second actionable items 550 may be actionable objects of an application for posting text. For example, among the plurality of first actionable items 510, three actionable items 502, 503, and 504 may be overlappingly displayed in a predetermined direction, for example, a horizontal or vertical direction. The plurality of first actionable items 510 may be items groupable into the same category group. One-way overlapping actionable items may be overlappingly displayed with respect to items for which applications providing the same function (for example, send on or post on) to the same input text are determined as the same category group. When different functions are provided to the same text, the applications may not be grouped and be displayed separately without overlapping.

The electronic device 101 may change a target task, based on a user input 501 of swiping the plurality of first actionable items 510. When the first actionable item 502 is displayed first, the first actionable item 502 may be configured as a target task. The electronic device 101 may change the target task to the second actionable item 503 or the third actionable item 504, based on the user input 501 of swiping on the plurality of first actionable items 510. For example, the electronic device 101 may receive a user input 530 of selecting an input field after swiping the plurality of actionable items 520 to the left as indicated by reference numeral 521. Among the plurality of second actionable items 550, three actionable items 553, 555, and 557 may be overlappingly displayed in a predetermined direction, for example, a horizontal or vertical direction. The electronic device 101 may change a target task, based on a user input 551 of swiping the plurality of second actionable items 550.

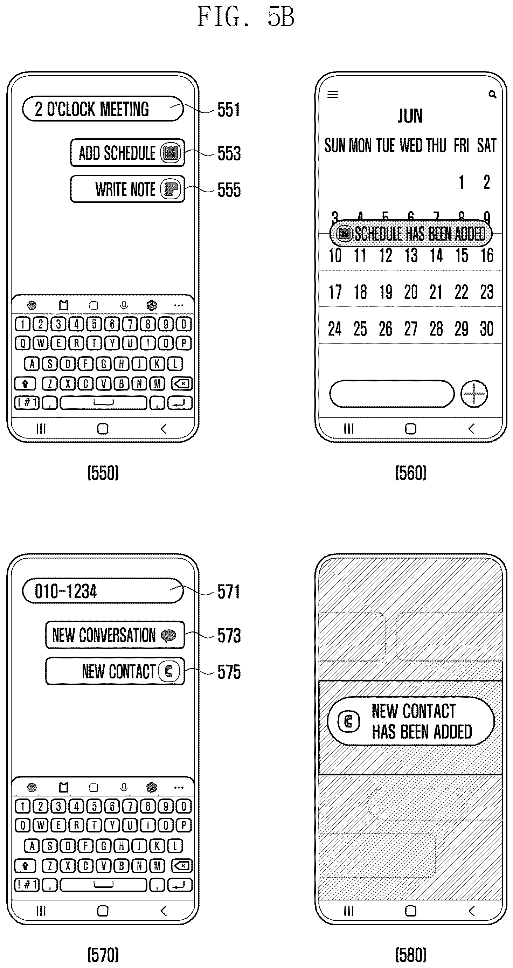

FIG. 5B are diagrams illustrating an example in which an electronic device performs a desired function according to a selection of an actionable object according to an embodiment.

Referring to FIG. 5B, the electronic device 101 may provide (for example, display on a display) a second user interface 550 including a plurality of actionable items 553 and 555, based on first text 551 input into the input field. For example, the electronic device 101 may display the first text 551 input as "2 o'clock meeting" into the input field, and analyze the content of the first text 551. The electronic device 101 may acquire the first text 551 through a keypad or a user voice. When the first text 551 includes a number (for example, 2) and time information (for example, 2 o'clock) through analysis of the content of the first text 551, the electronic device 101 may identify that the word "meeting" is included in the first text 551. The electronic device 101 may analyze the content of the first text 551 in conjunction with an external server (e.g., the server 108 in FIG. 1) or by using an artificial intelligence function stored in a memory (for example, the memory 130 in FIG. 1).

The electronic device 101 may provide a plurality of actionable items 553 and 555 for processing the content of the analyzed first text 551. The first actionable item 553 may be for registering (recording or storing) a 2 o'clock meeting in a schedule (for example, a schedule application), and the second actionable item 555 may be for storing (recording or registering) the 2 o'clock meeting in a note (for example, a note application). When the first actionable item 553 is selected in the second user interface 550, the electronic device 101 may register the 2 o'clock meeting today in the schedule application and provide a third user interface 560 indicating that the schedule has been added to the execution screen of the application.

According to an embodiment, the electronic device 101 may provide a fourth user interface 570 including a plurality of actionable items 573 and 575, based on the second text 571 input into the input field. For example, the electronic device 101 may display the second text 571 input as "010-1234" into the input field, and analyze the content of the second text 571. The electronic device 101 may acquire the second text 571 through a keypad or a user voice. The electronic device 101 may analyze the content of the second text 571, and recognize (or identify) that the second text 571 includes a number (for example, 0, 1, 2, 3, or 4) and that a user intention is a contact or a phone number. The electronic device 101 may analyze the content of the second text 571 in conjunction with the server 108 or by using an artificial intelligence function stored in the memory 130.

The electronic device 101 may provide the plurality of actionable items 573 and 575 for processing the content of the analyzed first text 571. The third actionable item 573 may be for transmitting (or reserving) a message (for example, a message application) to a counterpart whose phone number is 010-1234, and the fourth actionable item 575 may be for registering (or calling) a phone number (for example, a phone application or a contact application) of 010-1234. When the fourth actionable item 575 is selected in the fourth user interface 570, the electronic device 101 may register (or input) the second text 571 as a phone number in the contact application, and provide a fifth user interface 580 indicating that a new phone number has been added (or registered) by additionally receiving an input of a name of a counterpart in the contact application from the user. Alternatively, the electronic device 101 may not only input the second text 571 into the input field but also identify the name of the counterpart through analysis of situations before and after the second text 571 is input (or context or usage history), and automatically input the name of the counterpart into a counterpart name item when a phone number is added. Although only 010-1234 is displayed as the second text 571 in the drawings, the user may input the entire phone number, and then select the fourth actionable item 575 to register the new telephone number.

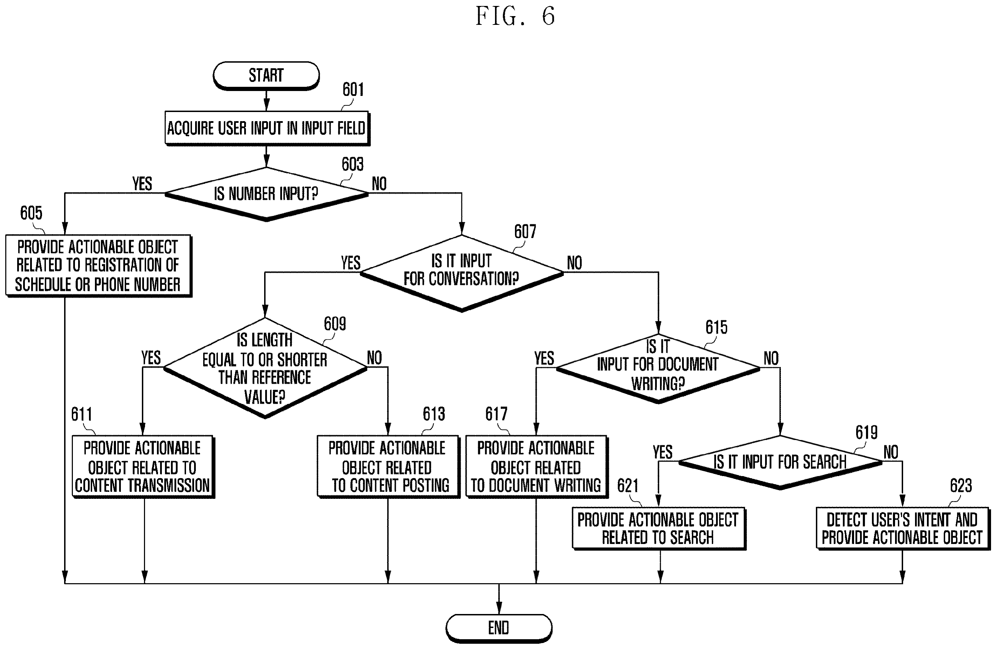

FIG. 6 is a flowchart illustrating a method by which an electronic device provides an actionable object corresponding to a user input according to an embodiment. FIG. 6 may illustrate in detail operations 307 and 309 of FIG. 3.

Referring to FIG. 6, in operation 601, a processor (for example, the processor 120 of FIG. 1) of an electronic device (for example, the electronic device 101 of FIG. 1) according to an embodiment may acquire a user input in an input field. The user input may be acquired through the keypad provided together when the input field is provided. Alternatively, the processor 120 may receive a voice as the user input, and convert the received voice into text by using a voice recognition technique. The processor 120 may display the user input in text in the input field as the user input is input.

Although operation 603 is performed earlier than operations 607, 609, 615, and 619, operation 607 is performed earlier than operations 609, 615, and 619, operation 609 is performed earlier than operations 615 and 619, and operation 615 is performed earlier than operation 619, in the drawings, operations 603, 607, 609, 615, and 619 may be performed in parallel (for example, simultaneously), or sequentially regardless of the order. The order of operations 603, 607, 609, 615, and 619 is not intended to limit the disclosure.

In operation 603, the processor 120 may determine whether a number is input in text. The processor 120 may determine whether a number is included in the text input as the user input. When the text includes a number, the processor 120 may perform operation 605, and when the text does not include a number, the processor 120 may perform operation 607.

When the text includes a number, the processor 120 may provide an actionable object associated with schedule or phone number registration in operation 605. The processor 120 may analyze the content of the text and provide an actionable object associated with the schedule or phone number registration as at least one actionable item for processing the content of the analyzed text. When a number is input by the user, the processor 120 may determine that the user intention is to add (or register) or change a phone number, or to add (or register) or change a schedule. The processor 120 may provide an actionable object that allows a function desired (or a function to be processed) by the user to be rapidly performed by analyzing the content of text input in real time. The processor 120 may receive selection of the actionable object from the user from among the provided actionable objects, and provide an execution screen (for example, a schedule registration screen, a phone number registration screen) of an application in which the text is processed as the input.

When the text does not include a number, the processor 120 may determine whether the text is an input for a conversation in operation 607. The processor 120 may analyze the content of the text in conjunction with an external server (for example, the server 108 of FIG. 1) or by using an artificial intelligence function stored in a memory (for example, the memory 130 of FIG. 1) and determine whether the text is an input for a conversation. The processor 120 may perform operation 609 when the text is an input for a conversation, and may perform operation 615 when the text is not an input for a conversation.

When the text is an input for a conversation, the processor 120 may determine whether the length of the text is equal to or shorter than a reference value in operation 609. The processor 120 may analyze the content of the text and, perform operation 611 when the length of the text is shorter than the reference value (for example, 40 bytes or 80 bytes), and perform operation 613 when the length of the text exceeds the reference value.

When the length of the text is equal to or shorter than the reference value, the processor 120 may provide an actionable object associated with content transfer in operation 611. For example, the processor 120 may provide at least one of an icon of a first messenger application for transmitting text, an icon of a second messenger application, or an icon of a third messenger application as the actionable object. The processor 120 may receive an actionable item from the user in the provided actionable object, and input the text into the input field of the execution screen of the selected messenger application to provide the same.

When the length of the text exceeds the reference value, the processor 120 may provide an actionable object associated with the content posting in operation 613. For example, the processor 120 may provide, as the actionable object, at least one of an icon of a first posting application for posting text, an icon of a second posting application, or an icon of a third posting application. The processor 120 may receive selection the actionable item from the user in the provided actionable object, and may input the text into the input field of the execution screen of the selected posting application to provide the same.

When the text is not an input for a conversation, the processor 120 may determine whether the text is an input for document writing in operation 615. The processor 120 may analyze the content of the text in conjunction with the server 108 or by using the artificial intelligence function stored in the memory 130, and determine whether the text is an input for document writing. When the text is an input for document writing, the processor 120 may perform operation 617, and when the text is not an input for document writing, the processor 120 may perform operation 619.

When the text is an input for document writing, the processor 120 may provide an actionable object associated with document writing in operation 617. For example, the actionable object may include at least one of a first document writing application (for example, Word), a second document writing application (for example, PowerPoint), a third document writing application (for example, Excel), or a fourth document writing application (for example, a note application). The processor 120 may receive selection of an actionable item from the user in the provided actionable object, and input the text into an input field of an execution screen of the selected document writing application to provide the same.

When the text is not an input for document writing, the processor 120 may determine whether the text is an input for search in operation 619. The processor 120 may determine whether the text is an input for search by analyzing the content of the text in conjunction with the server 108 or by using the artificial intelligence function stored in the memory 130. The processor 120 may perform operation 621 when the text is an input for search, and may perform operation 623 when the text is not an input for search.

When the text is an input for search, the processor 120 may provide an actionable object associated with the search in operation 621. For example, the actionable object may include at least one of a first search application (for example, Google), a second search application (for example, search within the electronic device), or a third search application. The processor 120 may receive an actionable item from the user in the provided actionable object, and provide a screen in which the text is input into the input field of the execution screen of the selected search application or provide a search result obtained by searching for the text to the search application.

When the text is not an input for search, the processor 120 may identify the user intention and provide an actionable object in operation 623. The processor 120 may determine the intent of the user who input the text by analyzing the contents of the text by using an artificial intelligence function stored in the server 108 or the memory 130. The processor 120 may provide an actionable object, based on the determination result.

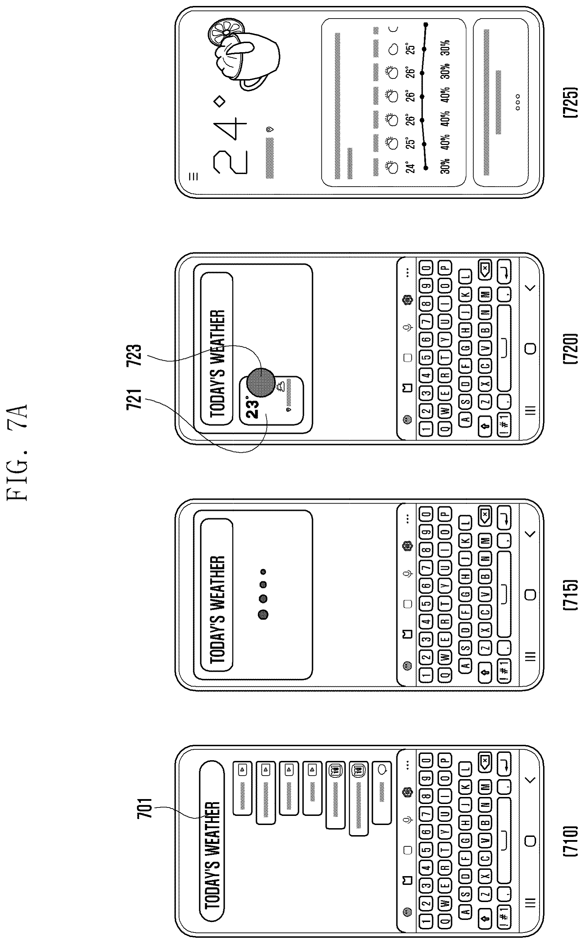

FIG. 7A is a diagram illustrating an example in which an electronic device provides weather information, based on a user input according to an embodiment.

Referring to FIG. 7A, a processor (for example, the processor 120 of FIG. 1) of an electronic device (for example, the electronic device 101 of FIG. 1) according to an embodiment may provide a first user interface 710 in which "today's weather" is input as a user input 701 into an input field. The first user interface 710 may include an input field and a keypad (or a virtual keypad). The processor 120 may acquire the user input 701 in the input field through the keypad or user voice in the first user interface 710, and display text (for example, today's weather) corresponding to the user input 701. The processor 120 may provide a second user interface 715 for analyzing the text. The second user interface 715 may include (display) a visual object indicating that the text analysis is in progress. The processor 120 may analyze the content of the text in conjunction with an external server (for example, the server 108 of FIG. 1) or by using an artificial intelligence function stored in the memory of the electronic device 101 (for example, the memory 130 of FIG. 1), and identify (or determine) what the intent of the user who has input the text is.

The processor 120 may provide a third user interface 720 that provides at least one actionable item for processing the analyzed text (for example, "today's weather"). The third user interface 720 may include text (for example, "today's weather"), an actionable item 721, or a keypad. Although there is one actionable item 721 in the drawings, the actionable item 721 may include multiple items. The processor 120 may detect a user input 723 for selecting the actionable item 721 in the third user interface 720. The actionable item 721 may be an actionable item for representing today's weather (for example, a widget of a weather application).

The processor 120 may provide a fourth user interface 725, based on the user input 723. The fourth user interface 725 may be an execution screen of a weather application that represents today's weather (for example, temperature and humidity) by at least one of text, images, and video.

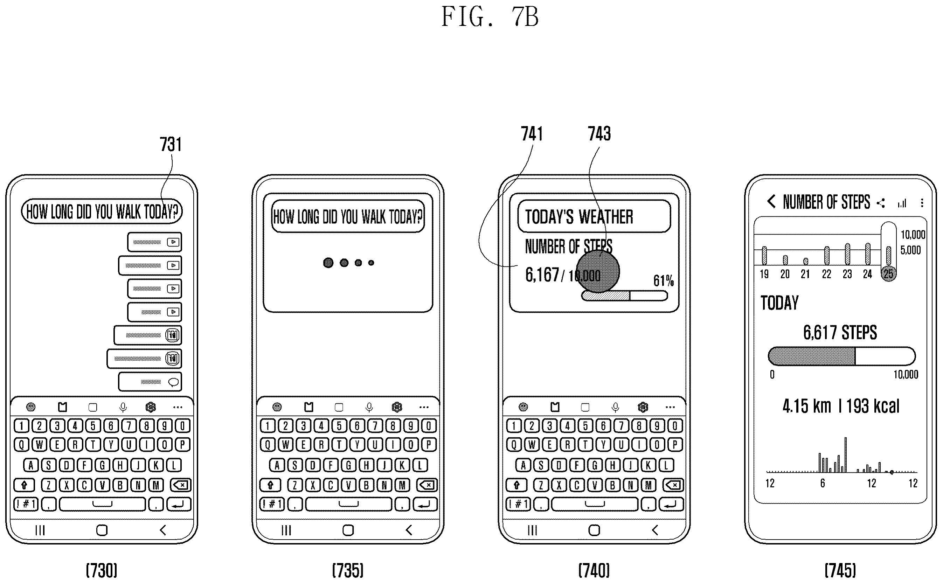

FIG. 7B is a diagram illustrating an example in which an electronic device provides health information, based on a user input according to an embodiment.

Referring to FIG. 7B, the processor 120 may provide a fifth user interface 730 in which "how long did you walk today?" is input as a user input 731 into an input field. The fifth user interface 730 may include an input field and a keypad. The processor 120 may acquire the user input 731 in the input field through the keypad or the user voice in the fifth user interface 730, and display the text (for example, "how long did you walk today?") corresponding to the user input 731. The processor 120 may provide a sixth user interface 735 for analyzing the text. The processor 120 may analyze the content of the text by using the artificial intelligence function stored in the server 108 or the memory 130 and analyze what the intent of the user who has input the text is.

The processor 120 may provide a seventh user interface 740 that provides at least one actionable item for processing the analyzed text (for example, "how long did you walk today?"). The seventh user interface 740 may include a text (for example, "how long did you walk today?"), an actionable item 741, or a keypad. The actionable item 741 may be an actionable item for indicating the number of steps today (for example, a widget of a health application). Although there is one actionable item 741 in the drawings, the actionable item 741 may include multiple items. The processor 120 may detect a user input 743 of selecting the actionable item 741 in the seventh user interface 740. The processor 120 may provide an eight user interface 745, based on the user input 743. The eighth user interface 745 may be an execution screen of the health application that represents heath information (for example, the number of steps toady, the number of steps for a week, or burned calories) by at least one of text, images, and videos.

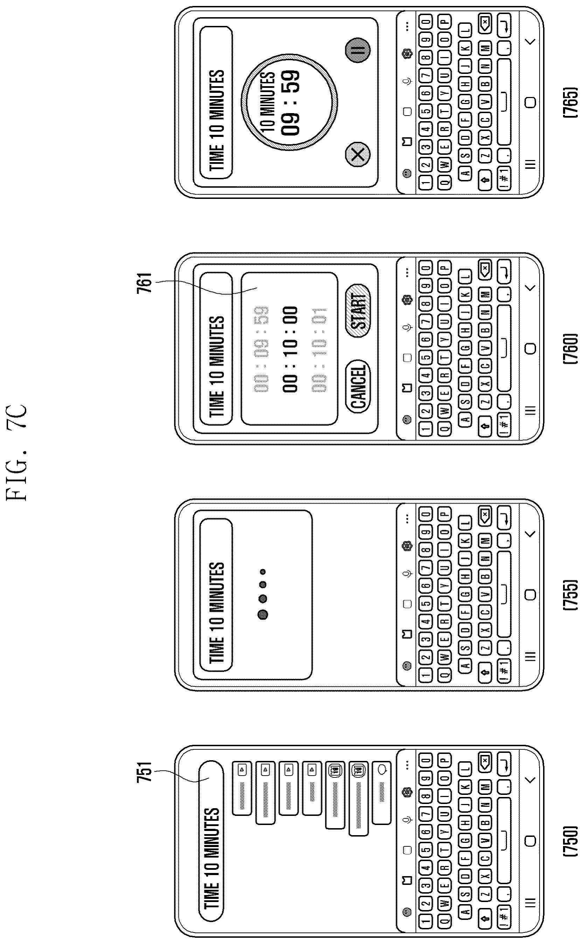

FIG. 7C is a diagram illustrating an example in which an electronic device provides a timer, based on a user input according to an embodiment.

Referring to FIG. 7C, the processor 120 may provide a ninth user interface 750 in which "time 10 minutes" is input as a user input 751 into an input field. The ninth user interface 750 may include an input field and a keypad. The processor 120 may acquire a user input 751 in the input field through the keypad or user voice in the ninth user interface 750, and display text corresponding to the user input 751 (for example, "time 10 minutes"). The processor 120 may provide a tenth user interface 755 for analyzing the text. The processor 120 may analyze the content of the text by using the artificial intelligence function stored in the server 108 or the memory 130 and analyze what the intent of the user who has input the text is.

The processor 120 may provide an eleventh user interface 760 that provides at least one actionable item for processing the analyzed text (for example, "time 10 minutes"). The eleventh user interface 760 may include a text (for example, "time 10 minutes"), an actionable item 761, or a keypad. Although there is one actionable item 761 in the drawings, the actionable item 761 may include multiple items. The eleventh user interface 760 may further include a menu (for example, a time configuration, a confirmation object, and a cancellation object) for controlling the actionable item 761. The processor 120 may provide the actionable item 761 in which a timer is set to 10 minutes by text (for example, time 10 minutes). The processor 120 may run the timer, based on a user input of selecting a start object in the eleventh user interface 760 and provide a twelfth user interface 765. The twelfth user interface 765 may be an execution screen of a timer (clock or alarm) application that represents the timer by at least one of text, images, and videos.

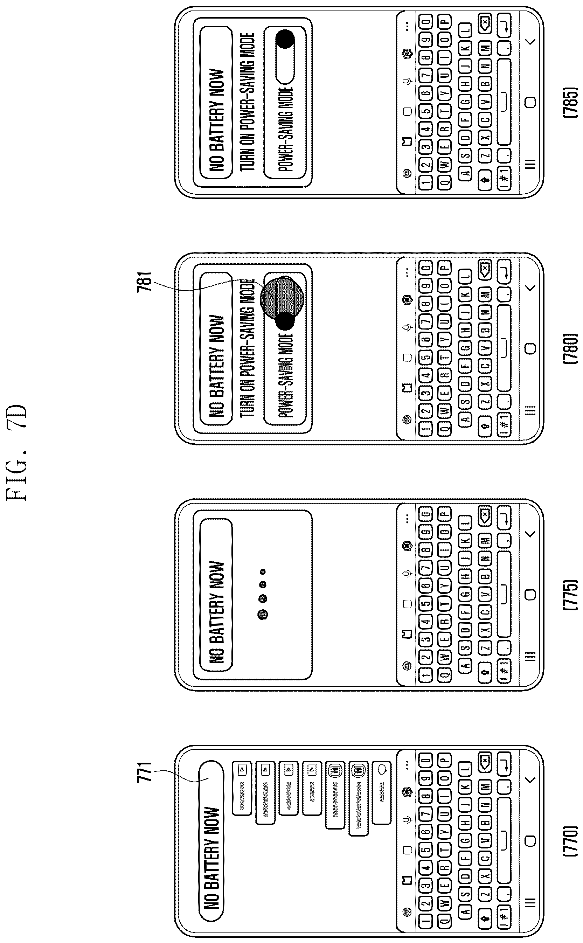

FIG. 7D is a diagram illustrating an example in which an electronic device controls a configuration of the electronic device, based on a user input according to an embodiment.

Referring to FIG. 7D, the processor 120 may provide a thirteenth user interface 770 in which "no battery now" is input as a user input 771 into an input field. The thirteenth user interface 770 may include an input field and a keypad. The processor 120 may acquire the user input 771 in the input field through the keypad or the user voice in the thirteenth user interface 770, and display text (for example, no battery now) corresponding to the user input 771. The processor 120 may provide a fourteenth user interface 775 for analyzing the text. The processor 120 may analyze the content of the text by using the artificial intelligence function stored in the server 108 or the memory 130 and analyze what the intent of the user who has input the text is.

The processor 120 may provide a fifteenth user interface 780 that provides at least one actionable item for processing the analyzed text (for example, "no battery now"). The fifteenth user interface 780 may include text (for example, "no battery now"), an actionable item (for example, a power-saving mode control item of the electronic device 101), or a keypad. The fifteenth user interface 780 may include a menu (for example, a toggle object) for controlling the actionable item. The processor 120 may provide an actionable item for changing a battery of the electronic device 101 to a power-saving mode, based on the text (for example, "no battery now"). The processor 120 may activate (for example, turn on) the power-saving mode, based on a user input of selecting the toggle object in the fifteenth user interface 780, and provide a sixteenth user interface 785. The sixteenth user interface 785 may be a configuration screen of the electronic device 101 for activating or deactivating the power-saving mode.

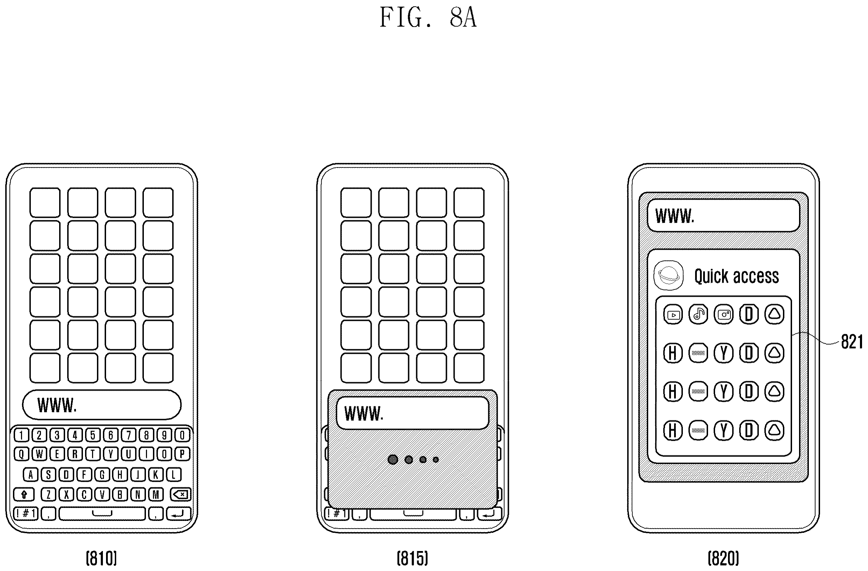

FIG. 8A is a diagram illustrating an example in which an electronic device provides an actionable object associated with Internet access, based on a user input, according to an embodiment.

Referring to FIG. 8A, a processor (for example, the processor 120 of FIG. 1) of an electronic device (for example, the electronic device 101 of FIG. 1) according to an embodiment may provide a first user interface 810 in which "WWW." is input as a user input into an input field. The first user interface 810 may include an input field and a keypad. The processor 120 may acquire the user input (for example, WWW.) in the input field through the keypad or a user voice in the first user interface 810 and display text (for example, WWW.) corresponding to the user input. The processor 120 may provide a second user interface 815 for analyzing the text. The processor 120 may analyze the content of the text in conjunction with an external server (for example, the server 108 of FIG. 1) or by using an artificial intelligence function stored in the memory (for example, the memory 130 of FIG. 1) of the electronic device 101 and analyze what the intent of the user who input the text is.

The processor 120 may provide a third user interface 820 that provides at least one actionable item for processing the analyzed text (for example, WWW.). The third user interface 820 may include the text (for example, WWW.) or a plurality of actionable items (for example, a plurality of Internet access icons) 821. The processor 120 may detect a user input for selecting at least one actionable item in the third user interface 820. The processor 120 may provide an execution screen of at least one Internet access application, based on the detected user input.

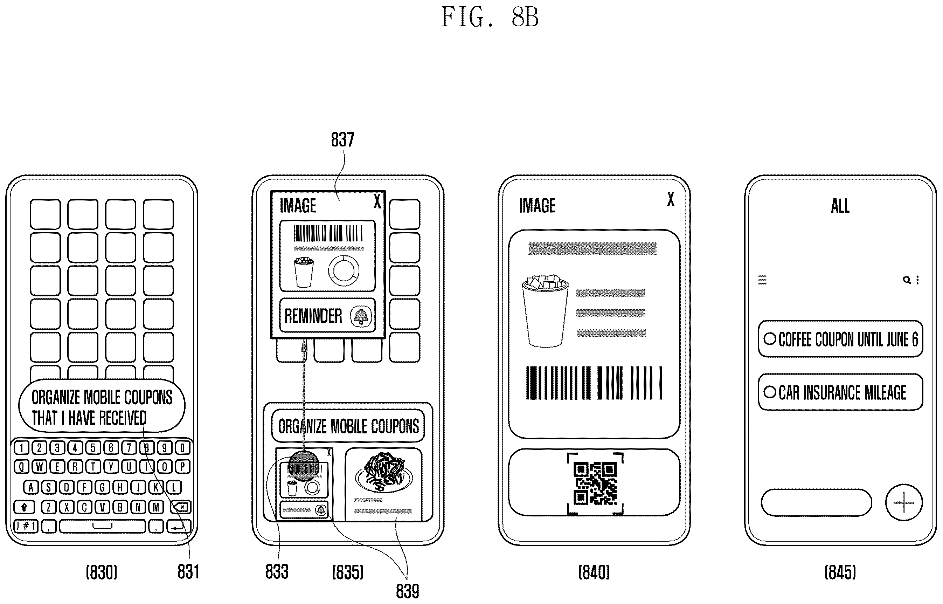

FIG. 8B is a diagram illustrating an example in which an electronic device provides coupon information as an actionable object in response to a user input according to an embodiment.

Referring to FIG. 8B, the processor 120 may provide a fourth user interface 830 in which "organize mobile coupons that I have received" is input as the user input 831 into the input field. The fourth user interface 830 may include an input field and a keypad. The processor 120 may acquire the user input 831 in the input field through the keypad or a user voice in the fourth user interface 830, and display text (for example, "organize mobile coupons that I have received") corresponding to the user input 831. The processor 120 may analyze the content of the text by using the artificial intelligence function stored in the server 108 or the memory 130 and analyze what the intent of the user who has input the text is.

The processor 120 may provide a fifth user interface 835 that provides at least one actionable item for processing the analyzed text (for example, "organize mobile coupons that I have received"). The fifth user interface 835 may include at least a part of the text (for example, "organize mobile coupons...") or a plurality of actionable items 839. The plurality of actionable items 839 may be provided based on the analysis result, and may be related to coupon images stored in the electronic device 101. The processor 120 may detect a user input 833 of selecting one actionable item 837 in the fifth user interface 835. The processor 120 may enlarge and display the actionable item 837 selected in the fifth user interface 835, based on the user input 833. The processor 120 may provide a sixth user interface 840 when the selected actionable item 837 is selected one more time. The sixth user interface 840 may be an execution screen of a gallery application that indicates coupon information (for example, a coupon name or a barcode) by at least one of text, an image, and a video. The processor 120 may provide an execution screen 845 of an application for registering a reminder when a reminder registration object is selected on the selected actionable item 837 in the fifth user interface 835.

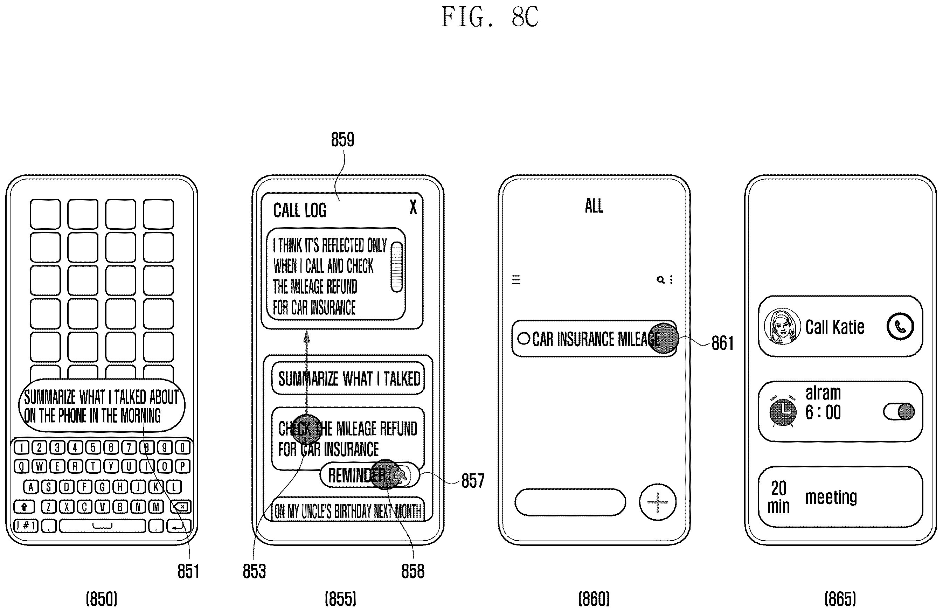

FIG. 8C is a diagram illustrating an example in which an electronic device provides an actionable object related to a call log in response to a user input according to an embodiment

Referring to FIG. 8C, the processor 120 may provide a seventh user interface 850 in which "summarize what I talked about on the phone in the morning" is input as a user input 851 into an input field. The seventh user interface 850 may include an input field and a keypad. The processor 120 may acquire the user input 851 in the input field through the keypad or a user voice in the seventh user interface 850, and display text corresponding to the user input 851 (for example, "summarize what I talked about on the phone in the morning"). The processor 120 may analyze the content of the text by using the artificial intelligence function stored in the server 108 or the memory 130 and analyze what the intent of the user who has input the text is.

The processor 120 may provide an eighth user interface 855 that provides at least one actionable item for processing the analyzed text (for example, summarize what I talked about on the phone in the morning). The eighth user interface 855 may include at least a part of the text (for example, summarize what I talked...) and/or a plurality of actionable items. The plurality of actionable items may be provided based on the analysis result, and for example, may be information obtained by converting the content of phone call stored in the electronic device for a predetermined time period (for example, this morning) into text. The processor 120 may detect a first user input 853 of selecting at least one actionable item in the eighth user interface 855. The processor 120 may display phone call log information 859 of the selected actionable item within the eighth user interface 855, based on the first user input 853. For example, the processor 120 may convert the content of phone call related to a car mileage into text by using a speech recognition technique, and display the converted text as the phone call log information 859.

According to an embodiment, the processor 120 may analyze the converted text to extract data validity information, and display an action object of an application for the additional configuration of the user with respect to the at least one actionable item, based on the data validity information. For example, the data validity information may include core keywords related to the user intention acquired based on the input text analysis result.

The eighth user interface 855 may further include an action object 857 of the application for configuring an alarm for the actionable item. When a user input 858 of selecting an action object 857 of the application is detected, the processor 120 may provide a ninth user interface 860. The ninth user interface 860 may be a first execution screen of an alarm application related to car insurance mileage. When a user input 861 of selecting "car insurance mileage" is detected in the ninth user interface 860, the processor 120 may provide a second execution screen 865 of the alarm application for registering (or storing) a schedule for confirming a reimbursement amount of car insurance mileage.

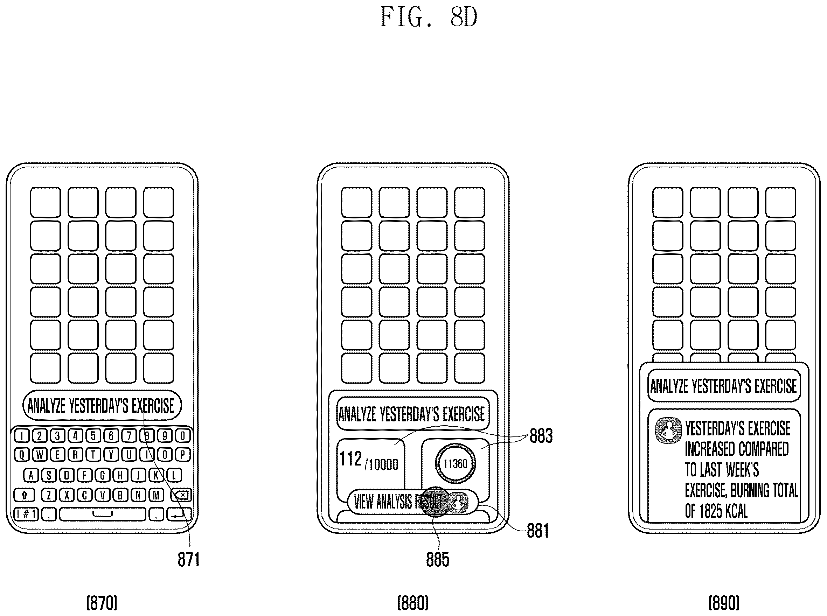

FIG. 8D is a diagram illustrating an example in which an electronic device provides exercise information as an actionable object in response to a user input according to an embodiment.

Referring to FIG. 8D, the processor 120 may provide a tenth user interface 870 in which "analyze yesterday's exercise" is input as a user input into the input field. The tenth user interface 870 may include an input field and a keypad. The processor 120 may acquire a user input 871 in the input field through the keypad or user voice in the tenth user interface 870, and display text corresponding to the user input 871 (for example, analyze yesterday's exercise). The processor 120 may analyze the content of the text by using an artificial intelligence function stored in the server 108 or the memory 130 and analyze what the intent of the user who has input the text is.

The processor 120 may provide an eleventh user interface 880 that provides at least one actionable item 883 for processing the analyzed text (for example, analyze yesterday's exercise). The eleventh user interface 880 may include text (for example, analyze yesterday's exercise), or a plurality of actionable items (for example, View the number steps and View calories). According to an embodiment, the processor 120 may analyze the text to extract data validity information, and display an action object of an application for the additional configuration of the user with respect to the at least one actionable item, based on the data validity information. For example, the data validity information may include core keywords related to the user intention acquired based on the input text analysis result.

The eleventh user interface 880 may further include an action object 881 of the application for viewing the result of the actionable item. When a user input 885 of selecting an action object 881 of the application is detected, the processor 120 may provide a twelfth user interface 890 including exercise analysis information. The twelfth user interface 890 may include text (for example, analyze yesterday's exercise) or exercise analysis information (for example, Yesterday's exercise increased compared to last week's exercise...). The exercise analysis information is user personal information and may be constituted by at least one of text, an image, or a video.

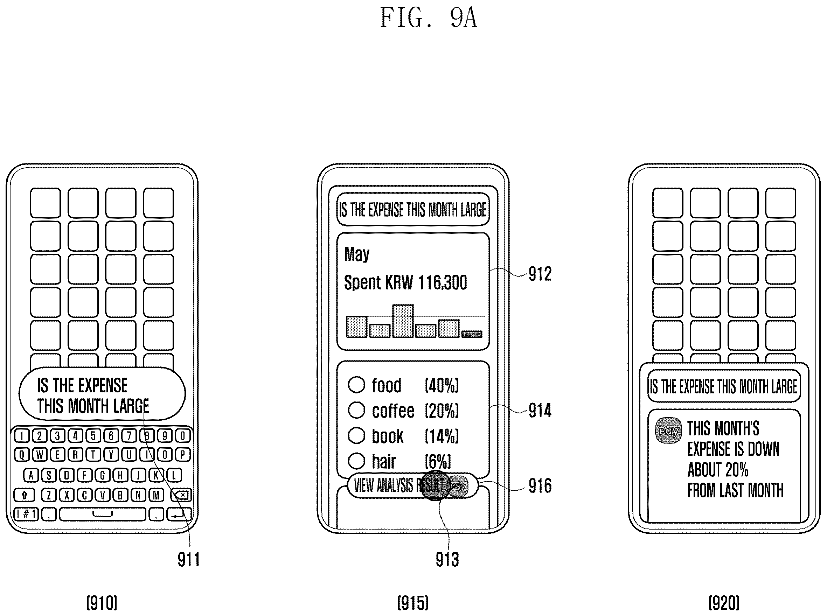

FIG. 9A is a diagram illustrating an example in which an electronic device provides consumption analysis information as an actionable object according to an embodiment.

Referring to FIG. 9A, a processor (for example, the processor 120 of FIG. 1) of an electronic device (for example, the electronic device 101 of FIG. 1) according to an embodiment may provide a first user interface 910 in which "is the expense this month large" is input as a user input 911 into an input field. The first user interface 910 may include an input field and a keypad. The processor 120 may acquire the user input 911 in the input field through the keypad or a user voice in the first user interface 910, and display the text (for example, "is the expense this month large") corresponding to the user input. The processor 120 may analyze the content of the text in conjunction with an external server (for example, the server 108 of FIG. 1) or by using an artificial intelligence function stored in the memory (for example, the memory 130 of FIG. 1) of the electronic device 101 and analyze what the intent of the user who input the text is.

The processor 120 may provide a second user interface 915 that provides at least one actionable item for processing the analyzed text (for example, "is the expense this month large"). The second user interface 915 may include text (for example, "is the expense this month large") or a plurality of actionable items 912 and 914. The first actionable item 912 may indicate an expense graph for this month, and the second actionable item 914 may indicate an expense category. In addition, the processor 120 may analyze the text to extract data validity information, and display an action object of an application for the additional configuration of the user with respect to the at least one actionable item, based on the data validity information. The second user interface 915 may further include an action object 916 of the application for viewing analysis results of actionable items. When a user input 913 of selecting an action object 916 of the application is detected, the processor 120 may provide a third user interface 920 including the expense analysis information. The third user interface 920 may include text (for example, is the expense this month large) or expense analysis information (for example, this month's expense is down...). The expense analysis information may be the user personal information and may be constituted by at least one of text, an image, and a video.

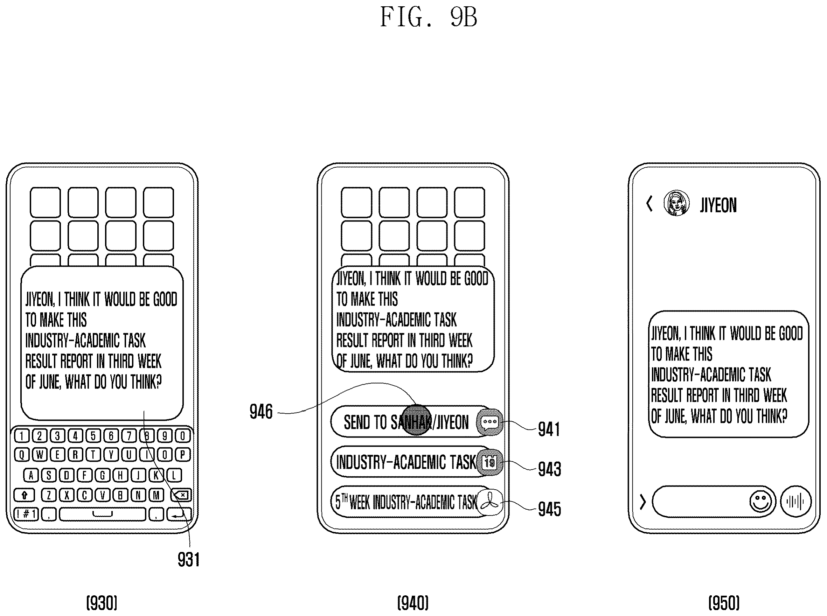

FIG. 9B is a diagram illustrating an example in which an electronic devices provides an actionable object related to message transmission according to an embodiment.

Referring to FIG. 9B, the processor 120 may provide a fourth user interface 930 in which "Jiyeon, I think it would be good to report..." is input as a user input 931 into an input field. The fourth user interface 930 may include an input field and a keypad. The processor 120 may acquire a user input 931 in the input field through the keypad or a user voice in the fourth user interface 930, and display text (for example, "Jiyeon, I think it would be good to...) corresponding to the user input. The processor 120 may analyze the content of the text by using the artificial intelligence function stored in the server 108 or the memory 130 and analyze what the intent of the user who has input the text is.

The processor 120 may provide a fifth user interface 940 that provides at least one actionable item for processing the analyzed text (for example, Jiyeon, I think it would be good to...). The fifth user interface 940 may include text (for example, Jiyeon, I think it would be good to...) or a plurality of actionable items 941, 943, and 945. In addition, the processor 120 may receive a user input 946 of selecting one of the plurality of actionable items 941, 943, and 945. When at least one actionable item is selected, the processor 120 may provide an execution screen 950 of the application corresponding to the selected actionable item. The execution screen 950 of the application may be an execution screen of the message application for transmitting text (for example, Jiyeon, I think it would be good to...) to a target (for example, Jiyeon). The processor 120 may analyze the text to configure a target (for example, Jiyeon) to which the text is to be transmitted, and may transmit the input text to the target.

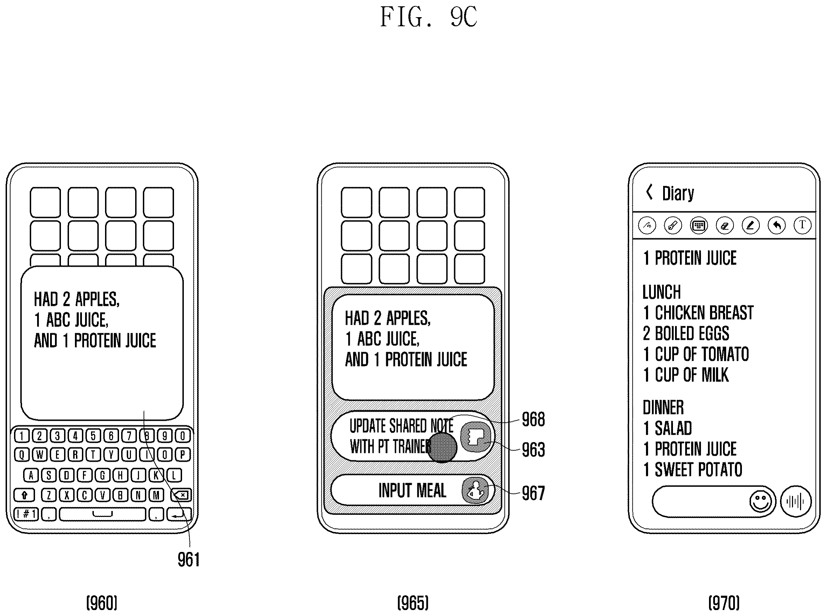

FIG. 9C is a diagram illustrating an example in which an electronic device provides an actionable object related to diet information input according to an embodiment.

Referring to FIG. 9C, the processor 120 may provide a sixth user interface 960 in which "2 apples, 1 ABC juice..." is input as a user input 961 into the input field. The sixth user interface 960 may include an input field and a keypad. The processor 120 may acquire the user input 961 in the input field through the keypad or a user voice in the sixth user interface 960, and display the text (for example, 2 apples, 1 ABC juice...) corresponding to the user input. The processor 120 may analyze the content of the text by using the artificial intelligence function stored in the server 108 or the memory 130 and analyze what the intent of the user who has input the text is.

The processor 120 may provide a seventh user interface 965 that provides at least one actionable item for processing the analyzed text (for example, 2 apples, 1 ABC juice...). The seventh user interface 965 may include text (for example, 2 apples, 1 ABC juice...) or a plurality of actionable items 963 and 967. In addition, the processor 120 may receive a user input 968 of selecting one of the plurality of actionable items 963 and 967. When at least one actionable item is selected, the processor 120 may provide an execution screen 970 of the application corresponding to the selected actionable item. The execution screen 970 of the application may be an execution screen of a note application for registering text (for example, 2 apples, 1 ABC juice...) in diet information. The processor 120 may analyze the text, identify an application in which the text is to be stored (or registered), and store the text in a specific item (for example, diet information) within the identified application.

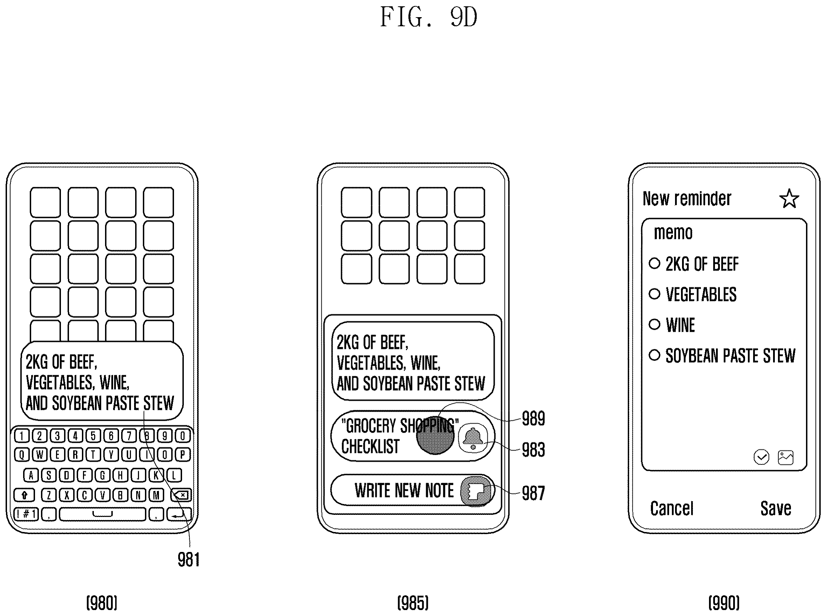

FIG. 9D is a diagram illustrating an example in which an electronic device provides an actionable object related to a memo according to an embodiment.

Referring to FIG. 9D, the processor 120 may provide an eighth user interface 980 in which "2kg of beef, vegetables, ..." is input as a user input 981 into the input field. The eighth user interface 980 may include an input field and a keypad. The processor 120 may acquire a user input 981 in the input field through the keypad or a user voice in the eighth user interface 968, and may display text (for example, 2kg of beef, vegetable, ...) corresponding to the user input. The processor 120 may analyze the content of the text by using the artificial intelligence function stored in the server 108 or the memory 130 and analyze what the intent of the user who has input the text is.

The processor 120 may provide a ninth user interface 985 that provides at least one actionable item for processing the analyzed text (for example, 2 kg of beef, vegetables, ...). The ninth user interface 985 may include text (for example, 2 kg of beef, vegetables, ...) or a plurality of actionable items 983 and 987. In addition, the processor 120 may receive a user input 983 of selecting one of the plurality of actionable items 987 and 989. In response to the user input 989, the processor 120 may provide an execution screen 990 of the application corresponding to the selected actionable item. The execution screen 990 of the application may be an execution screen of the application that configures a grocery shopping list by input text (for example, 2 kg of beef, vegetables ...) to generate and register a reminder. The processor 120 may analyze the text, identify an application in which the text is to be stored (or registered), and store the text as a specific item (for example, grocery shopping information) in the identified application or as a new note.

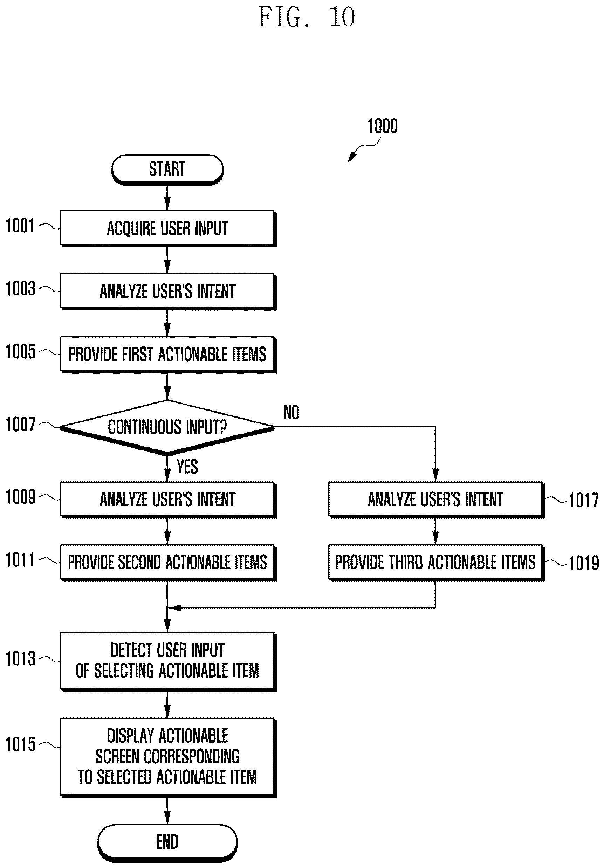

FIG. 10 is a flowchart 1000 illustrating a method by which an electronic device differently provides an actionable object in response to a user input according to an embodiment. FIG. 10 may illustrate in detail operations 307 and 309 of FIG. 3.

Referring to FIG. 10, in operation 1001, a processor (for example, the processor 120 of FIG. 1) of an electronic device (for example, the electronic device 101 of FIG. 1) according to an embodiment may acquire a user input in an input field. The user input may be acquired through a keypad provided together when the input field is provided. Alternatively, the processor 120 may receive a voice as the user input, and convert the received voice into text by using a voice recognition technique. The processor 120 may display the user input in text in the input field as the user input is input.

In operation 1003, the processor 120 may analyze a user intention. The processor 120 may analyze the user intention as the user input is input. The processor 120 may analyze the content of the text in conjunction with an external server (for example, the server 108 of FIG. 1) or by using an artificial intelligence function stored in a memory (for example, the memory 130 of FIG. 1) and analyze the user intention, based on the analysis result.

In operation 1005, the processor 120 may provide first actionable items. The processor 120 may provide the first actionable items, based on the analyzed user intention.

In operation 1007, the processor 120 may determine whether a user input is continued. When the user input is continued, the processor 120 may perform operation 1009, and when the user input is not continued, the processor 120 may perform operation 1013.

When the user input is continued, the processor 120 may analyze the user intention by further considering the additionally input user input in operation 1009. Like in operation 1003, the processor 120 may analyze the content of the text by using the artificial intelligence function stored in the server 108 or the memory 130, and analyze the user intention, based on the analysis result.

In operation 1011, the processor 120 may provide second actionable items. The processor 120 may provide the second actionable items, based on the analyzed user intention. The first actionable items and the second actionable items may be different from each other, or some of the actionable items may overlap with each other.

In operation 1013, the processor 120 may detect a user input of selecting an actionable item. The user input may be selecting at least one of the plurality of first actionable items or second actionable items.

In operation 1015, the processor 120 may display an execution screen corresponding to the selected actionable item. The processor 120 may transfer the acquired user input to an application or a configuration screen corresponding to the selected actionable item, and process the user input as an input of the application or the configuration screen. The execution screen may be an execution screen of the application in which the user input has been processed as an input. For example, the execution screen of the application is a messenger application, and may transmit the content of the user input to a target. The target may be configured based on the user input. The execution screen may be a configuration screen of the electronic device 101 in which the user input is processed as an input. For example, the configuration screen of the electronic device 101 may be a configuration screen for accessing the Internet (for example, Wi-Fi) or changing a display mode.

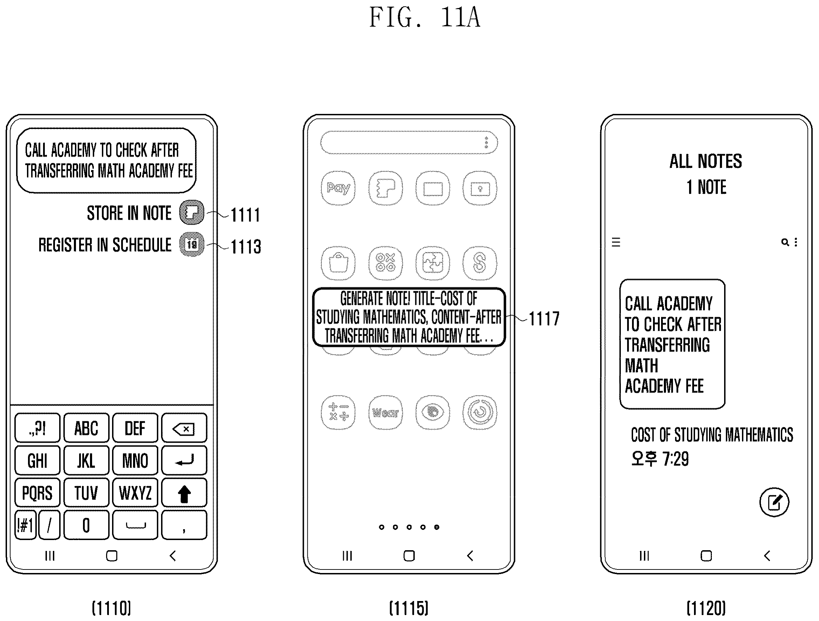

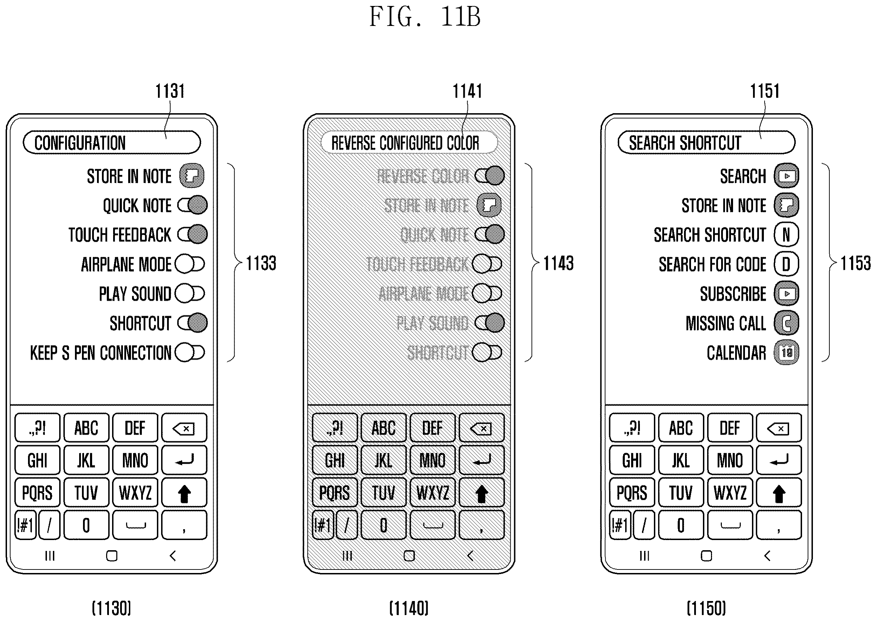

FIGS. 11A and 11B are diagrams illustrating an example in which an electronic device differently provides an actionable object in response to input content according to an embodiment.

Referring to FIG. 11A, a processor (for example, the processor 120 of FIG. 1) of an electronic device (for example, the electronic device 101 of FIG. 1) according to an embodiment may display a first user interface 1110 on the display (for example, the display module 160 of FIG. 1). The first user interface 1110 may include an input field, a keypad, or at least one of the actionable items 1111 and 1113. The processor 120 may analyze the content input into the input field in real time and display at least one actionable item corresponding to the analysis result. When the actionable item 1111 for storing in a note is selected in the first user interface 1110, the processor 120 may provide a second user interface 1115. The second user interface 1115 may display the input text 1117 as a pop-up. After providing the second user interface 1115, the processor 120 may provide an execution screen 1120 of a note application for registering a user input in a note a predetermined time later.

Referring to FIG. 11B, the processor 120 may display the third user interface 1130 on the display module 160. The third user interface 1130 may include an input field, a keypad, or an actionable item. The processor 120 may analyze a user input 1131 (for example, "configuration") input into the input field in real time and display actionable items (for example, the first actionable items) 1133 corresponding to the analysis result. When the user continues to input text into the input field after the third user interface 1130 is provided, the processor 120 may provide a fourth user interface 1140. The processor 120 may provide the fourth user interface 1140 in response to a second user input 1141 (for example, "reverse a configured color") additionally input. The fourth user interface 1140 may display the second user input 1141 input into the input field, and may include a keypad or a plurality of actionable items (for example, second actionable items) 1143. The fifth user interface 1150 may display a third user input 1151 input into the input field and include a keypad or a plurality of actionable items (for example, second actionable items) 1153.

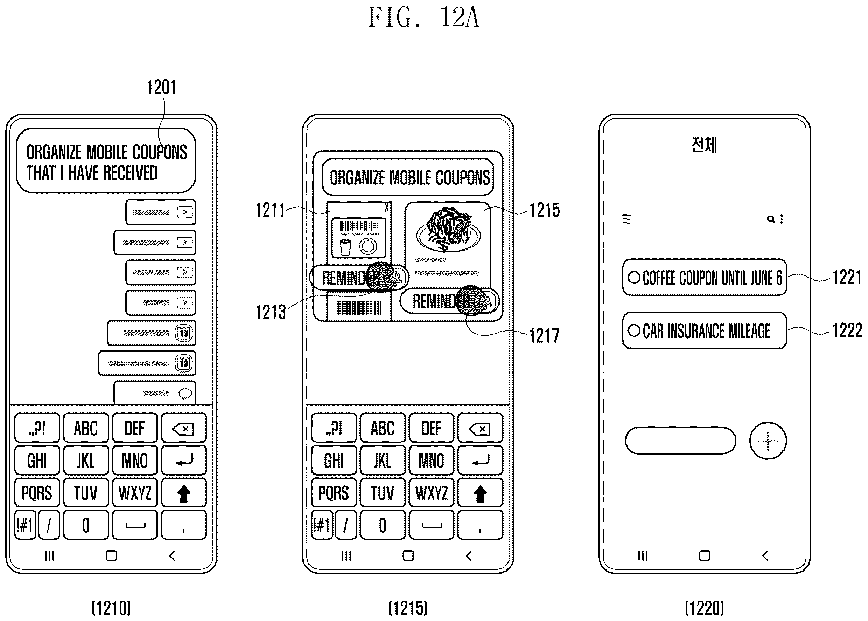

FIGS. 12A to 12C are diagrams illustrating an example in which an electronic device performs a desired function through an actionable object provided in response to a user input according to an embodiment.

Referring to FIG. 12A, a processor (for example, the processor 120 of FIG. 1) of an electronic device (for example, the electronic device 101 of FIG. 1) according to an embodiment may display a first user interface 1210 on a display (for example, the display module 160 of FIG. 1). The first user interface 1210 may include an input field and a keypad. The processor 120 may analyze text 1201 input into the input field of the first user interface 1210 in real time. The processor 120 may provide a second user interface 1215, based on the analysis result of the text 1201. The second user interface 1215 may include an input field, a plurality of actionable items, an action object of an application corresponding to the actionable item, and a keypad.

The action object of the application may indicate a specific function (or task) in the application. For example, when the at least one actionable item is a coupon image, the processor 120 may display an alarm object capable of reading a validity term of the coupon and notifying of the validity term as the action object of the application. The processor 120 may receive user inputs 1213 and 1217 of selecting action objects 1211 or 1215 of a plurality of applications included in the second user interface 1215 from the user. The processor 120 may provide a third user interface 1220 in response to the user inputs 1213 and 1217 of selecting the action objects 1211 and 1215 of the plurality of applications. The third user interface 1220 may include items 1221 and 1222 for configuring the validity term for each of the plurality of actionable items 1211 and 1215.

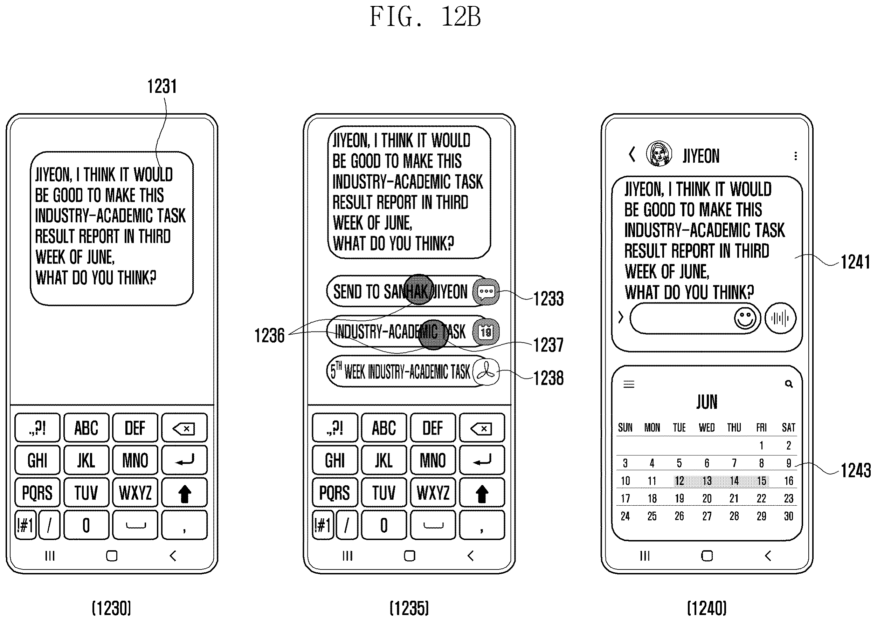

Referring to FIG. 12B, the processor 120 may display a fourth user interface 1230 on the display module 160. The fourth user interface 1230 may include an input field and a keypad. The processor 120 may analyze text 1230 input into the input field of the fourth user interface 1210 in real time. The processor 120 may provide a fifth user interface 1235, based on the analysis result of the text 1231. The fifth user interface 1235 may include an input field, a plurality of actionable items 1233, 1237, and 1238, and a keypad. A fifth week industry-academic task 1238 is a file (pdf) stored in the electronic device 101, and may be a file searched for in the electronic device 101 with regard to "industry-academic task result report" in the text 1231. A plurality of actionable items 12333 or 1237 may be configured by text (for example, send to Sanhak/Jiyeon, industry-academic task) or an image (for example, an application icon).

The processor 120 may receive a user input 1236 of selecting the first actionable item 1233 and the second actionable item 1237 included in the fifth user interface 1235 from the user. For example, the user input 1236 is an input of substantially simultaneously selecting the first actionable item 1233 and the second actionable item 1237, and may be a multi-touch input. The processor 120 may provide a sixth user interface 1240 in accordance with the selected actionable items 1233 and 1237. The sixth user interface 1240 may include an execution screen 1241 of a message application corresponding to the first actionable item 1233 and an execution screen 1243 of a schedule application corresponding to the second actionable item 1237. When a plurality of actionable items is selected, the processor 120 may provide execution screens of a plurality of applications as a multi-window. The execution screen 1241 of the message application may be transmission of text 1231 to "Jiyeon" who is a target for transmission, based on the text 1231. The execution screen 1243 of the schedule application may be registration (or storage) of the date of the industry-academic task as the third week of June, based on the text 1231.

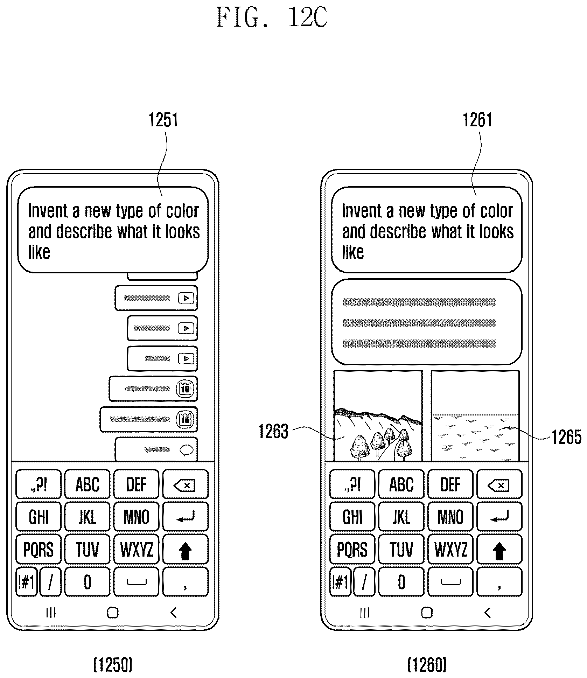

Referring to FIG. 12C, the processor 120 may display a seventh user interface 1250 on the display module 160. The seventh user interface 1250 may include an input field and a keypad. The processor 120 may analyze text 1251 input into the input field of the seventh user interface 1250 in real time. The processor 120 may provide an eighth user interface 1260, based on the analysis result of the text 1251. The eighth user interface 1260 may include an input field, a plurality of actionable items 1263 and 1265, and a keypad. The plurality of actionable items 1263 and 1265 may be configured by at least one of text, an image, and a video The plurality of actionable items 1263 and 1265 may be actionable items configured analyzing text and making an answer to a question as the analysis result through a generative AI when receiving an input of the question-type text "Invent a new type of color and describe what it looks like" from the user. The user may select at least one actionable item from among the plurality of actionable items 1263 and 1265 included in the eighth user interface 1260 to perform a desired function.

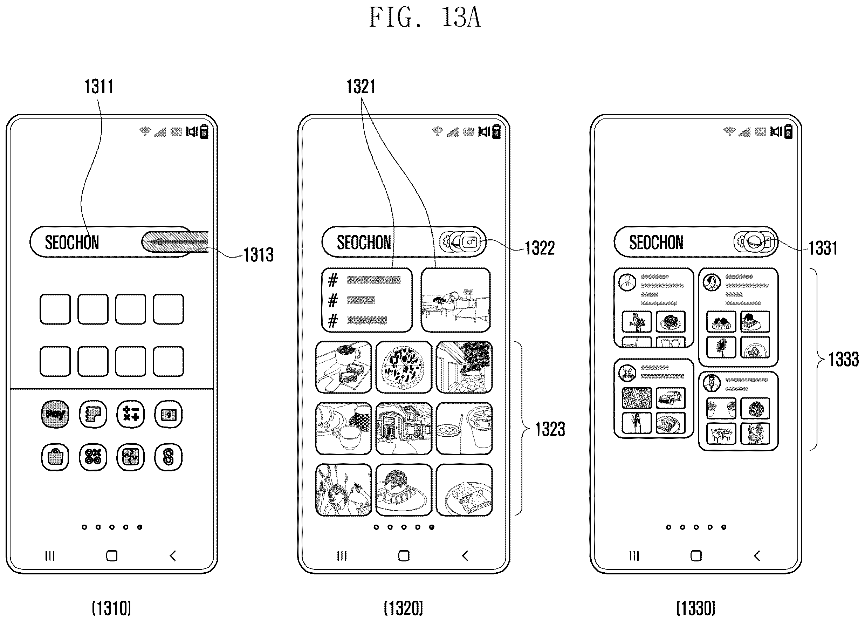

FIGS. 13A to 13C are diagrams illustrating an example in which an electronic device provides an actionable object in response to a user input according to an embodiment.

Referring to FIG. 13A, a processor (for example, the processor 120 of FIG. 1) of an electronic device (for example, the electronic device 101 of FIG. 1) according to an embodiment may display a first user interface 1310 on a display (for example, the display module 160 of FIG. 1). The third user interface 1310 may include an input field on a home screen. The processor 120 may acquire a first user input 1311 through the input field of the first user interface 1310. The processor 120 may display the acquired first user input 1311 in text and detect a second user input 1313 of swiping the right side of the input field from the outside to the inside. In response to detecting the second user input 1313, the processor 120 may analyze the first user input 1311 to provide the second user interface 1320. The second user interface 1320 may include an input field in which the first user input 1311 is displayed, a plurality of first actionable items 1321, and a plurality of second actionable items 1323. The plurality of first actionable items 1321 may include execution screens (for example, preview screens) of a plurality of posting application for processing the first user input 1311. The plurality of second actionable items 1323 may include images searched for by the first user input 1311. The searched images may be images searched through the posting applications (for example, an Instagram application 1322 corresponding to the target application) displayed as a group in the input field.

Alternatively, the processor 120 may provide a third user interface 1330 by analyzing the first user input 1311 in response to detecting the second user input 1313. The processor 120 may search for the content of the first user input 1311 through various search application groups and then provide a search result. The third user interface 1330 may include an input field in which the first user input 1311 is displayed, a plurality of third actionable items 1331, and a plurality of fourth actionable items 1333. The plurality of third actionable items 1331 may include icons of the plurality of posting applications for processing the first user input 1311. The plurality of fourth actionable items 1333 may include a plurality of web pages searched for by the first user input 1311. The plurality of web pages may include images searched for through the posting application (for example, a Twitter application).

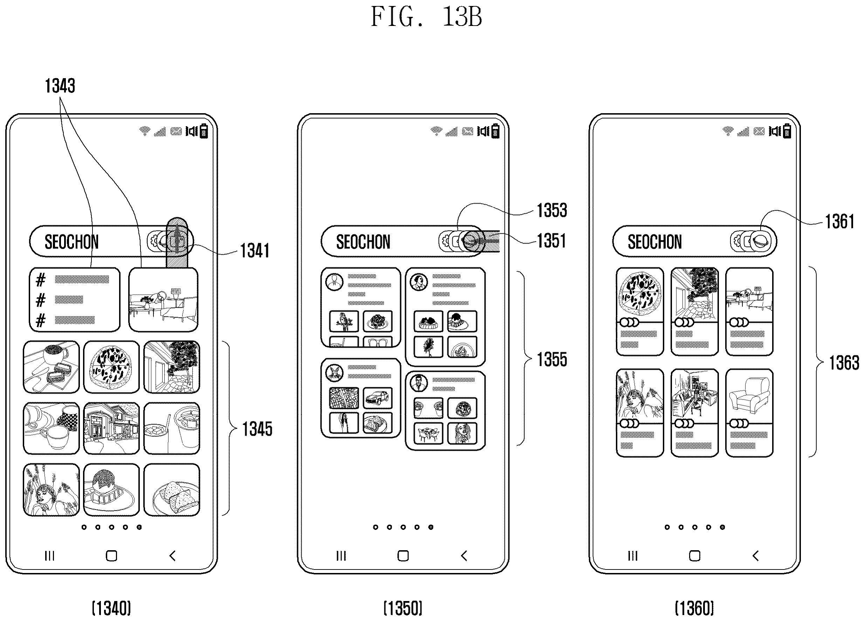

Referring to FIG. 13B, the processor 120 may display a fourth user interface 1340 on the display module 160. The fourth user interface 1340 may include an input field in which text (for example, "Seochon") is displayed, a plurality of first actionable items 1343, and a plurality of second actionable items 1345. The plurality of first actionable items 1343 may include execution screens (for example, preview screens) of a plurality of posting applications for processing the text (for example, "Seochon"). The plurality of second actionable items 1345 may include images searched for by text. Alternatively, the processor 120 may provide a fifth user interface 1350 in response to detection of a third user input 1341 in the fourth user interface 1340. The third user input 1341 may be an input of swiping a plurality of application icons from bottom to top. In this case, the processor 120 may provide a fifth user interface 1350 including a plurality of application icons and actionable items of different type of applications. The fifth user interface 1350 may include an input field in which text is displayed, a plurality of third actionable items 1353, and a plurality of fourth actionable items 1355. The plurality of third actionable items 1353 may include icons of a plurality of web search applications for processing text. The plurality of fourth actionable items 1355 may include a web page searched for by text.

Alternatively, the processor 120 may provide a sixth user interface 1360 in response to detection of a fourth user input 1351 in the fifth user interface 1360. The fourth user input 1351 may be an input of swiping a plurality of third actionable items 1353 from the right to the left. In this case, the processor 120 may provide a sixth user interface 1360 in which a target task of the plurality of third actionable items 1353 is changed. The sixth user interface 1360 may include an input field in which text is displayed, a plurality of third actionable items 1361, and a plurality of fifth actionable items 1363. The target task of the plurality of third actionable items of the fifth user interface 1350 is a first web search application, and the target task of the plurality of third actionable items 1361 of the sixth user interface 1360 may be a second web search application. The plurality of fifth actionable items 1363 is web pages searched for by text, and may include web pages different from the plurality of fourth actionable items.

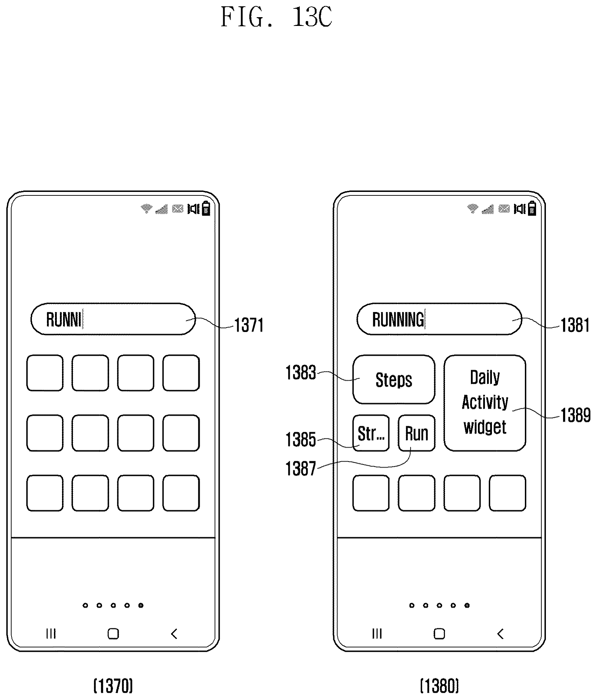

Referring to FIG. 13C, the processor 120 may display a seventh user interface 1370 on the display module 160. The seventh user interface 1370 may be acquiring a user input 1371 through the input field displayed on the home screen. The seventh user interface 1370 may display text (for example, "runni") corresponding to the user input 1371. The processor 120 may analyze a user input 1381 input to the input field and provide an eighth user interface 1380. The eighth user interface 1380 may include an input field in which a user input 1381 is displayed in text, a first actionable item 1383, a second actionable item 1385, a third actionable item 1387, and a fourth actionable item 1389 corresponding to the user input 1381. The first actionable item 1383, the second actionable item 1385, the third actionable item 1387, and the fourth actionable item 1389 may be actionable objects of an exercise or health application that has processed the user input 1381. A plurality of actionable items 1383 to 1389 may be provided in a pop-up form in the eighth user interface 1380.

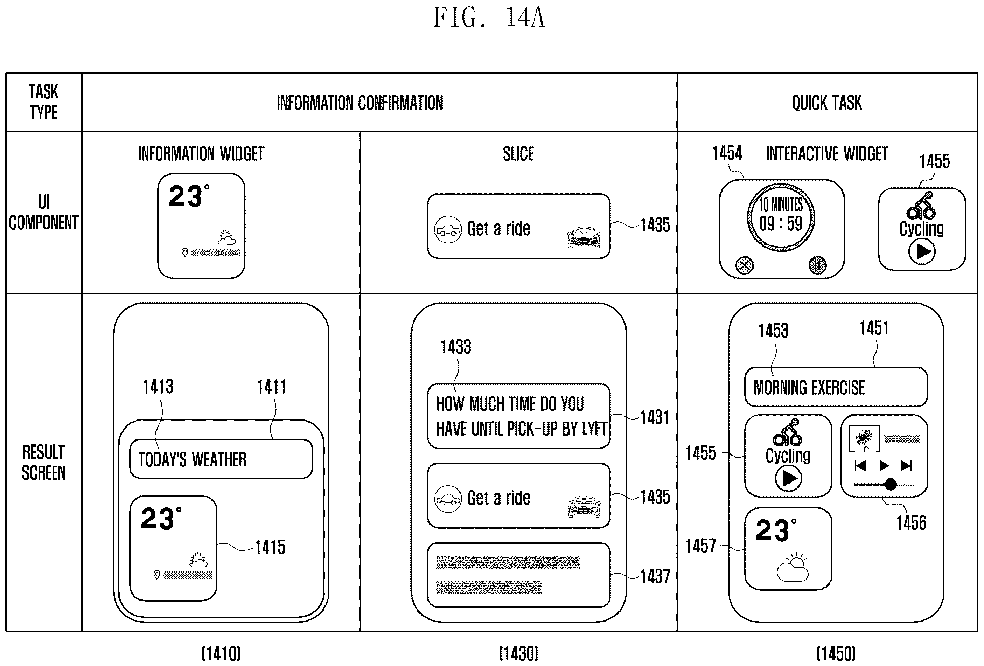

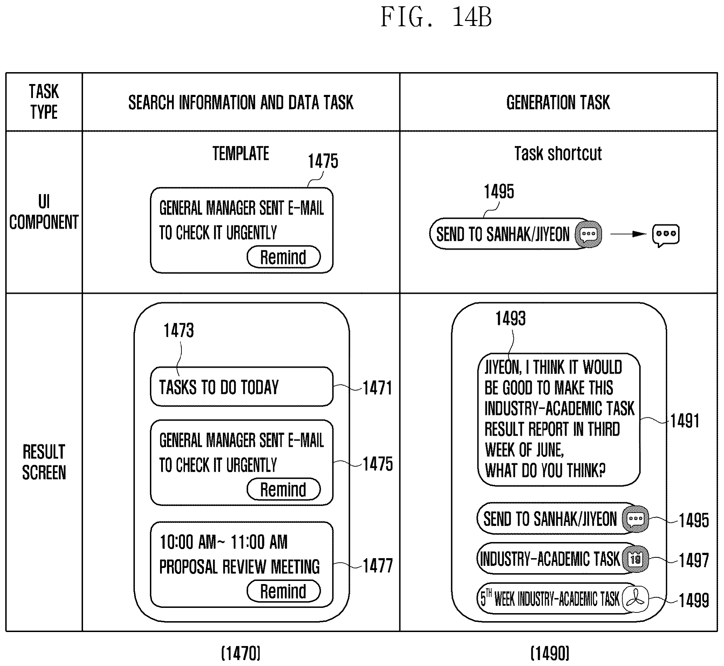

FIG. 14A and FIG. 14B are diagrams illustrating an example in which an electronic device classifies a task type according to an embodiment.

Referring to FIG. 14A, a processor (for example, the processor 120 of FIG. 1) of an electronic device (for example, the electronic device 101 of FIG. 1) according to an embodiment may provide different UI components (elements) and result screens according to a task type determined based on an analysis result of text input to an input field. For example, the processor 120 may configure (or generate) a UI component as an information widget or a slice when the task type is information confirmation.

When the task type is information confirmation, the processor 120 may determine the UI component as an information widget, based on the analysis result of text 1413 input into an input field 1411, and provide a first result screen 1410 including a first information widget 14115. When the task type is information confirmation, the processor 120 may determine the UI component as a slice, based on the analysis result of text 1433 input into an input field 1431, and provide a second result screen 1430 including a plurality of slices 1435 and 1437. When the task type is a quick task, the processor 120 may determine the UI component as an interactive widget, based on the analysis result of text 1453 input into an input field 1451, and provide a third result screen 1450 including a plurality of interactive widgets 1455, 1456, and 1457.

Referring to FIG. 14B, when the task type is a search information and a data task, the processor 120 may determine the UI component as a template, based on the analysis result of text 1473 input into an input field 1471, and may provide a fourth result screen 1470 including a plurality of template items 1475 and 1477. When the task type is a generation task, the processor 120 may determine the UI component as a task shortcut, based on the analysis result of text 1493 input in an input field 1491, and may provide a fifth result screen 1490 including a plurality shortcut items 1495, 1497, and 1499.

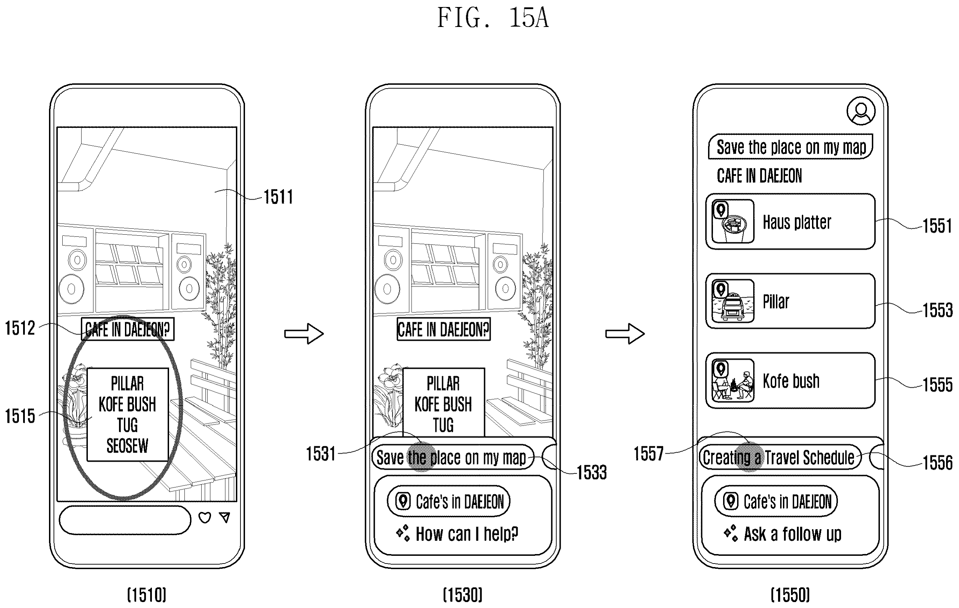

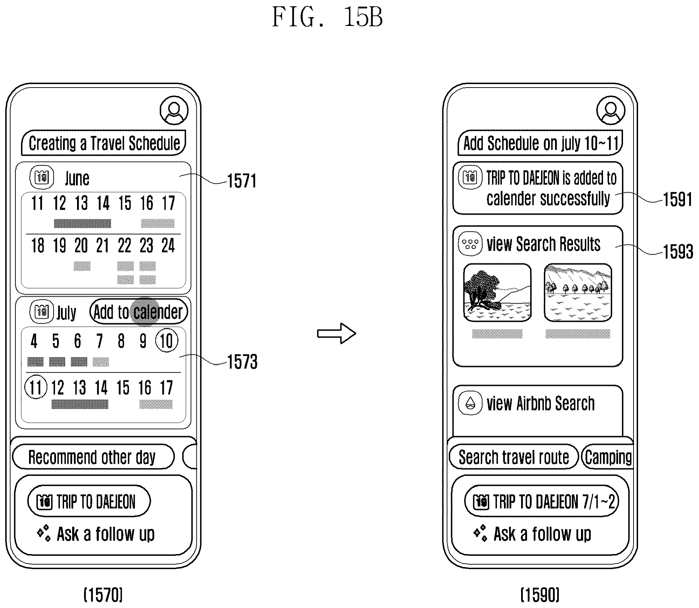

FIGS. 15A and 15B illustrate an example in which an electronic device analyzes an image to provide an actionable object according to an embodiment.

Referring to FIG. 15A, a processor (for example, the processor 120 of FIG. 1) of an electronic device (for example, the electronic device 101 of FIG. 1) according to an embodiment may provide an actionable object by triggering an operation of capturing an image (for example, a photo of a cafe in Daejeon), in addition to a text input through a keypad and a users voice, according to a multimodal input of the user. The processor 120 may provide a first user interface 1510 including the captured image 1511. The processor 120 may extract text 1512 and 1515 related to an image from the image 1511. For example, the text 1512 or 1515 may include text extracted using metadata or OCR within the image 1511 or collectable text in the electronic device 101 related to the image 1511 (for example, a name of an object in the image, Internet search history, or conversations related to the image). The processor 120 may analyze the extracted text by using on-device AI or a server. For example, a screen for extracting and analyzing the text 1512 and 1515 related to the image 1511 may be the same as the second user interface 1530.

The processor 120 may analyze text and images in the captured image 1511 which is being input as an input by the user or a stored image. For example, the processor 120 may recognize the text as the content recommending a café in Daejeon, and since the extracted text 1512 and 1515 is a place and the recommended content and has been captured, interpret the same as content significant to the user. Therefore, the processor 120 may provide an actionable object so as to perform a series of tasks, such as a task of connecting to a map application connected to the text 1512 or 1512 included in the content, that is, the place and moving to a schedule connected to a trip after a map is stored.

The processor 120 may suggest a suitable action, based on the text analysis result (for example, cafe list in Daejeon) and provide an actionable object 1533. When a user input 1531 of selecting the actionable object 1533 is detected in the second user interface 1530, the processor 120 may provide a relevant continuous additional action, based on the execution result of the selected actionable object 1533. For example, the processor 120 may provide a third user interface 1550. The third user interface 1550 may provide a first additional action 1551, a second additional action 1553, a third additional action 1555, and a fourth additional action 1556, based on the execution result of the selected actionable object 1533.

The first additional action 1551, the second additional action 1553, and the third additional action 1555 are execution results of the actionable object (Save the places on map) of storing cafes included in the cafe list in Daejeon on the map, and may be an execution result screen showing a list of 10 cafes in Daejeon stored in the map. The fourth additional action 1556 is to propose to generate a travel schedule, and may be to continuously propose actions of including a plan of visit to cafes in Daejeon in the travel schedule as the additional action with respect to the corresponding cafes in Daejeon.

When a user input 1557 of selecting a fourth additional action 1556 is detected in the third user interface 1550, the processor 120 may provide a fourth user interface 1570.

Referring to FIG. 15B, the fourth user interface 1570 may include a first actionable object 1571 and a second actionable object 1573. When a user input 1575 of selecting Add to calendar is detected in the fourth user interface 1570, the processor 120 may provide a fifth user interface 1590. The fifth user interface 1590 may include the first actionable object 1591 and the second actionable object 1593.

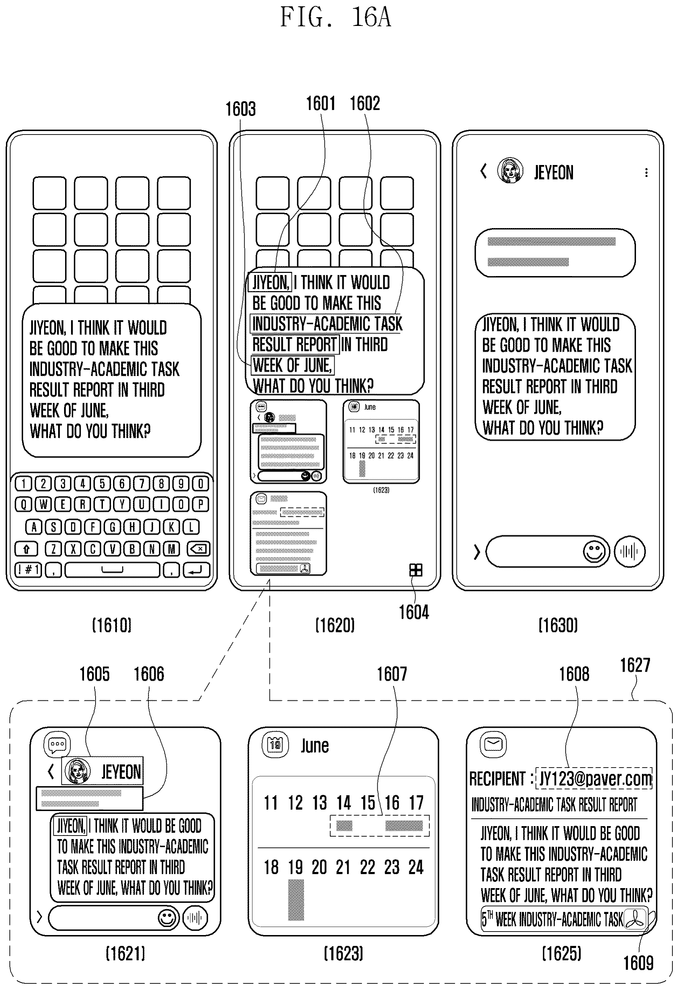

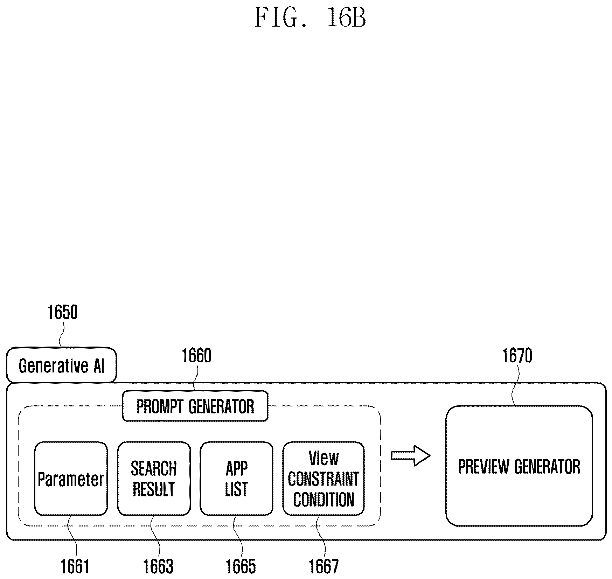

FIGS. 16A and 16B are diagrams illustrating an example in which an electronic device provides a preview of an application list for processing text according to an embodiment.

Referring to FIG. 16A, a processor (for example, the processor 120 of FIG. 1) of an electronic device (for example, the electronic device 101 of FIG. 1) according to an embodiment may analyze text by using generative artificial intelligence (AI), and may provide preview images 1621, 1623, and 1625 of a determined application list 1627 for processing text, based on a text analysis result. The processor 120 may analyze the text by using the generative AI in the first user interface 1610. The processor 120 may generate a preview image, based on the analyzed text, and provide a second user interface 1620. The operation of generating the preview image by using the generative AI may configure preview images 1621, 1623, and 1625 of actionable applications through, without directly executing predetermined applications, input text, extracted parameters 1601, 1602, and 1603 (or data validity information), search results 1605, 1606, 1607, 1608, and 1609 using the parameters 1601, 1602, and 1603, and filtering of a view constraint condition based on a priority.

The previews provided in the second user interface 1620 are previews of the applications included in the application list determined based on the text analysis result, and may include, for example, an execution screen 1621 of a message application, an execution screen 1623 of a calendar application, and an execution screen 1625 of an e-mail application. When a user input of selecting the execution screen 1621 of the message application is detected, the processor 120 may provide a third user interface 1630. The third user interface 1630 may be an execution screen of a message application.

The second user interface 1620 may include a view type 1604 of a preview list of the determined applications. The view type 1604 may be provided in the form of a grid type or a list type, and when a user input of selecting the view type 1604 is received, the view type 1604 may be changed.

Referring to FIG. 16B, the generative AI 1650 may include a prompt generator 1660 and a preview generator 1670. The prompt generator 1660 may extract a parameter 1661 (for example, a main keyword or data validity information) from the text input through the input field, search for on-device data related to the parameter by using the extracted parameter to generate a search result 1663, provide the search result 1663 to all applications included in an application list (for example, an App list 1665) installed in the electronic device 101, and provide the preview to the preview generator 1670, based on a view constraint condition 1667 (for example, a priority such as a usage pattern history or the number of predetermined views). The App list 1665 included in the prompt generator 1660 may include (local) applications installed in the electronic device 101 and (remote) applications actionable via a server. The preview generator 1670 may configure previews of the actionable applications.

A method of operating an electronic device according to an embodiment of the disclosure may include an operation of displaying an input field, in response to a first user input calling the input field, an operation of acquiring a second user input which is input into the input field, an operation of displaying the acquired second user input as text in the input field, and an operation of performing control to analyze contents of the text and display at least one actionable item for processing the analyzed contents, together with at least a part of the text, through the display, wherein the at least one actionable item may include at least one of an actionable object of an application, an actionable object providing a function within the application, an execution preview based on generative artificial intelligence (AI), or a configuration object of the electronic device.

The operation of performing control may include an operation of extracting a parameter from the text, an operation of generating a search result by using the extracted parameter, an operation of determining an application list by a view constraint condition filter, an operation of generating an execution preview of an application included in the application list, and an operation of providing the generated execution preview.

The method may further include an operation of analyzing a user intention, based on that text input into the input field in real time is updated, and an operation of adding or changing at least one actionable item displayed on the display, in response to the analyzed user intention.

The method may further include an operation of, in case that a first actionable item is configured as a target task among a plurality of actionable items, changing the target task to a second actionable item among the plurality of actionable items, based on a third user input.

The method may further include an operation of transferring the text, as an input, to an application of an actionable item selected by a user from the at least one actionable item and an operation of, in response to the selection of the actionable item, displaying an execution screen of an application, which is obtained after the transferred text has been processed, on the display.

The method may further include an operation of transferring the text, as an input, to a configuration of the electronic device or user personal information corresponding to an actionable item selected by a user in the at least one actionable item and an operation of, in response to the selection of the actionable item, displaying a configuration screen of the electronic device or the user personal information, which is obtained after the transferred text has been processed, on the display.

The method may further include an operation of analyzing the at least one actionable item and displaying an action object of an application for an additional configuration of a user in the at least one actionable item.

The method may further include an operation of converting a voice of the at least one actionable item into text, an operation of analyzing the converted text to extract data validity information, and an operation of displaying an action object of an application for an additional configuration of a user in the at least one actionable item, based on the data validity information.

The method may further include an operation of collecting data stored in the memory of the electronic device and in an application installed in the electronic device, based on contents of the acquired text, and an operation of analyzing the collected data and providing analysis result information as the at least one actionable item.

The method may further include an operation of interworking with an external server to configure answer contents corresponding to contents of the acquired text and providing the answer contents as the at least one actionable item.

The method may further include an operation of searching for data through the Internet, based on contents of the acquired text, and an operation of providing, as the at least one actionable item, the searched data as Internet result information.

The method may further include an operation of receiving a captured image selected as the second user input and an operation of acquiring text from the selected captured image and display the text

Various embodiments of the disclosure disclosed in the specifications and drawings present specific examples for ease of description of the technical content of the disclosure and to help understanding of the disclosure, but are not intended to limit the scope of the disclosure. Therefore, it should be construed that not only the embodiments disclosed herein but also all modifications or modified forms capable of being derived on the basis of the technical idea of the disclosure are included in the scope of the disclosure.

## Claims

1. An electronic device (101) comprising:
a display (160);
a memory (130) configured to store instructions; and
a processor (120),
wherein the instructions stored in the memory, when executed by the processor, cause the electronic device to:
display an input field, in response to a first user input calling the input field;
acquire a second user input which is input into the input field;
display the acquired second user input as text in the input field; and
perform control to analyze contents of the text and display at least one actionable item for processing the analyzed contents, together with at least a part of the text, through the display, and
wherein the at least one actionable item comprises at least one of an actionable object of an application, an actionable object providing a function within the application, an execution preview based on generative artificial intelligence (AI), or a configuration object of the electronic device.

2. The electronic device of claim 1, wherein the instructions, when executed by the processor, cause the electronic device to:
extract a parameter from the text;
generate a search result by using the extracted parameter;
determine an application list by a view constraint condition filter;
generate an execution preview of an application included in the application list; and
provide the generated execution preview.

3. The electronic device of claim 1, wherein the instructions, when executed by the processor, cause the electronic device to:
based on that text input into the input field in real time is updated, analyze a user intention; and
in response to the analyzed user intention, add or change at least one actionable item displayed on the display.

4. The electronic device of claim 1, wherein the instructions, when executed by the processor, cause the electronic device to, in case that a first actionable item is configured as a target task among a plurality of actionable items, change the target task to a second actionable item among the plurality of actionable items, based on a third user input.

5. The electronic device of claim 1, wherein the instructions, when executed by the processor, cause the electronic device to:
transfer the text, as an input, to an application of an actionable item selected by a user from the at least one actionable item; and
in response to the selection of the actionable item, display an execution screen of the application, which is obtained after the transferred text has be processed, on the display.

6. The electronic device of claim 1, wherein the instructions, when executed by the processor, cause the electronic device to:
transfer the text, as an input, to configurations of the electronic device or user personal information corresponding to an actionable item selected by a user from the at least one actionable item; and
in response to the selection of the actionable item, display a configuration screen of the electronic device or the user personal information, which is obtained after the transferred text has been processed, on the display.

7. The electronic device of claim 1, wherein the instructions, when executed by the processor, cause the electronic device to analyze the at least one actionable item and display an action object of an application for an additional configuration of a user in the at least one actionable item.

8. The electronic device of claim 1, wherein the instructions, when executed by the processor, cause the electronic device to:
convert a voice of the at least one actionable item into text;
analyze the converted text to extract data validity information; and
based on the data validity information, display an action object of an application for an additional configuration of a user in the at least one actionable item,.

9. The electronic device of claim 1, wherein the instructions, when executed by the processor, cause the electronic device to:
based on contents of the acquired text, collect data stored in the memory of the electronic device and in an application installed in the electronic device; and
analyze the collected data and provide analysis result information as the at least one actionable item.

10. The electronic device of claim 1, wherein the instructions, when executed by the processor, cause the electronic device to interwork with an external server to configure answer contents corresponding to contents of the acquired text, and provide the answer contents as the at least one actionable item.

11. The electronic device of claim 1, wherein the instructions, when executed by the processor, cause the electronic device to:
based on contents of the acquired text, search for data, based on the Internet; and
provide, as the at least one actionable item, the searched data as Internet result information.

12. The electronic device of claim 1, wherein the instructions, when executed by the processor, cause the electronic device to:
receive a captured image selected as the second user input; and
acquire text from the selected captured image and display the text.

13. A method of operating an electronic device (101), the method comprising:
displaying an input field, in response to a first user input calling the input field;
acquiring a second user input which is input into the input field;
displaying the acquired second user input as text in the input field; and
performing control to analyze contents of the text and display at least one actionable item for processing the analyzed contents, together with at least a part of the text, through the display,
wherein the at least one actionable item comprises at least one of an actionable object of an application, an actionable object providing a function within the application, an execution preview based on generative artificial intelligence (AI), or a configuration object of the electronic device.

14. The method of claim 13, wherein the performing control comprises:
extracting a parameter from the text;
generating a search result by using the extracted parameter;
determining an application list by a view constraint condition filter;
generating an execution preview of an application included in the application list; and
providing the generated execution preview.

15. The method of claim 13, further comprising:
based on that text input into the input field in real time is updated, analyzing a user intention; and
in response to the analyzed user intention, adding or changing at least one actionable item displayed on the display.
